# EUROPEAN PATENT SPECIFICATION

(11) **EP 1 265 145 B1**
(45) Date of publication and mention of the grant of the patent: **05.10.2011**
(21) Application number: 02011865.9
(22) Date of filing: 28.05.2002
(51) Int. Cl.: G06F 11/34

(54) **Log collecting/analyzing system with separated functions of collecting log information and analyzing the same**
Logbucherfassung- und Analysesystem mit separaten Funktionen von Loginformationserfassung und -analyse
Système pour la collection et l'analyse de journal avec l'étape de collection d'information de journal séparée de l'étape d'analyse

(30) Priority: 04.06.2001 JP 2001167815; 17.01.2002 JP 2002008278
(43) Date of publication of application: 11.12.2002
(73) Proprietor: Sony Computer Entertainment Inc., Tokyo 107-0052 (JP)
(72) Inventor: Kimoto, Yousuke, Tokyo 107-0052 (JP); Kanee, Kazuhiro, Tokyo 107-0052 (JP)
(74) Representative: Müller - Hoffmann & Partner

(56) References cited:
- EP-A- 0 913 774
- EP-A- 0 992 910
- WO-A-01/02932
- WO-A-01/39012
- US-A- 6 138 250

## Description

This application is related to Japanese Patent Application No. 2001-167815 filed on June 4, 2001 and No. 2002-8278 filed on January 17, 2002, based on which this application claims priority under the Paris Convention and the contents of which are incorporated herein by reference.

### BACKGROUND OF THE INVENTION

### 1. Field of the Invention

The present invention relates to a log collecting/analyzing system, a method of log collection, a log collection program, a method of log analysis, a log analysis program, a log collecting device, a log analyzing device, a log collection terminal device and a log server, which comprises separated functions of collecting log information and analyzing collected log information, and in which the log information is collected at client side and transmitted to server side, and the server side stores the log information to analyze.

### 2. Description of the Related Art

Conventional log collecting/analyzing system is used for the purpose of observing something, in a system for providing certain service. For instance, if the log collecting/analyzing system is applied to some on-line system, it is possible to ascertain how unfair access, fault of system or so forth occurred by analyzing log. In addition, if the log collecting/analyzing system is applied to WWW (World Wide Web) server, it is possible to record details that what-like client referred to, when, and what-like contents by analyzing log. And, as a result, it becomes possible to learn interest level of the user on the contents for example.

However, in these conventional log collecting/analyzing systems described-above, when contents for servicing are determined first, contents for observing are also fixed depending on the determined contents for servicing. And, as a result, collected log information requires specialized analysis system for log. Accordingly, an analyzing system for observation log at the on-line system is entirely different from an analyzing system for log of the WWW server for instance.

In addition, as for method of log collection itself, exclusive design and mounting are provided in every service system. For this reason, although basic function of collecting log is only desired, subtle differences are generated on log collection items. As a result, exclusive design and mounting is required for every service as for the basic collecting system.

In addition, document EP-A-0 913 774 discloses a managing computer for a plurality of computers connected via a network that acquires log information and event information from any of said plurality of computers and stores operation definition information used to define a schedule of process operations executed in the plurality of computers in relation to the log information and the event information into a database.

### SUMMARY OF THE INVENTION

It is an object of the present invention to provide a log collecting/analyzing system, a method for log collection, a log collecting program, a method for log analysis, a log analysis program, a log collecting device, and a log analyzing device, all of which are capable of performing flexible log collection and analysis without being fixed to a log system as before.

According to the present invention, the above objects are achieved by the claimed matter according to the independent claims.

Advantageous further developments of the invention are subject of the accompanying dependent claims.

### BRIEF DESCRIPTION OF THE DRAWINGS

The above and other features will be better understood from the exemplary embodiments described below, taken together with the drawings, of which:
FIG.1 is a block diagram illustrating the whole configuration of a log collecting/analyzing system;
FIG.2 is a block diagram illustrating configuration example of a log collection terminal device;
FIG.3 is a flowchart illustrating flow of log system processing at the log collection terminal device;
FIG.4 is a flowchart illustrating flow of initialization of a log system;
FIG.5 is a view illustrating one example of log user information;
FIG.6 is a flowchart illustrating login processing;
FIG.7 is a view illustrating display example of login screen;
FIG.8 is a view illustrating configuration of a log system at the side of the log collection terminal device for log collection;
FIG.9 is a view illustrating configuration of log object;
FIG.10 is a view illustrating internal structure of management information of log;
FIG.11 is a chart of tree structure illustrating configuration example of log data 1;
FIG.12 is a view illustrating an example of being represented about log data by using XML (eXtensible Markup Language);
FIG.13 is a view illustrating an example of being represented about log object by using XML;
FIG.14 is a view illustrating an example of API (Application Programming Interface) for forming log data;
FIG.15 is a view illustrating storing method of log object;
FIG.16 is a block diagram illustrating configuration example of log server;
FIG.17 is a view illustrating configuration of log system at the side of the log server;
FIG.18 is a view illustrating configuration of management database of log;
FIG.19A illustrates configuration of management database of log: a view illustrating management table of log user;
FIG.19B illustrates configuration of management database of log: a view illustrating management table of utilization of log application;
FIG.19C illustrates configuration of management database of log: a view illustrating management table of log application;
FIG.20 is a view illustrating configuration of log storage database;
FIG.21A illustrates configuration of log storage database: a view illustrating log storage table for the user;
FIG.21B illustrates configuration of log storage database: a view illustrating log storage table for log application;
FIG.22 is a view illustrating configuration of management database of log analyzed result;
FIG.23 illustrates configuration of management database of log analyzed result: a view illustrating management table of log analyzed result;
FIG.24 is a view illustrating an example of storage table of log analyzed result;
FIG.25 is a flowchart illustrating flow of log server system;
FIG.26 is a flowchart illustrating flow of reception of log;
FIG.27 is a flowchart illustrating flow of log analysis;
FIG.28 is a flowchart illustrating flow of acquisition of log analyzed result of utilizing company side of log collection service;
FIG.29 is a flowchart illustrating flow of acquisition of log analyzed result at log server side; and
FIG.30 is a view illustrating another configuration of log system at log collection terminal device.

### DETAILED DESCRIPTION OF THE PREFERRED EMBODIMENTS

Preferred embodiments of the invention are described in detail below, with reference made to relevant accompanying drawings. Specific embodiment to which the present invention is applied will be described in detail referring to accompanying drawings below.

The present embodiment provides entirely new example of log collecting/analyzing system in which client side collects log information and transmits the collected log information to server side, and the server side stores therein the transmitted log information to analyze. Namely, the present invention separates function of log collecting/analyzing system into two functions of collecting log and storing/analyzing the collected log in which the client side collects logs while the server side stores and analyzes the logs.

In addition, function of the client side is to establish basic structure of log and then generating desired log information from the basic structure of log. On the other hand, function of the log server is to execute storage-analysis of the received log information and then analyzing the log information in every application program.

### The Whole Configuration of Log Collecting/Analyzing System

In the fist place, rough flow of log collection, analysis and provision in the log collecting/analyzing system will be described.

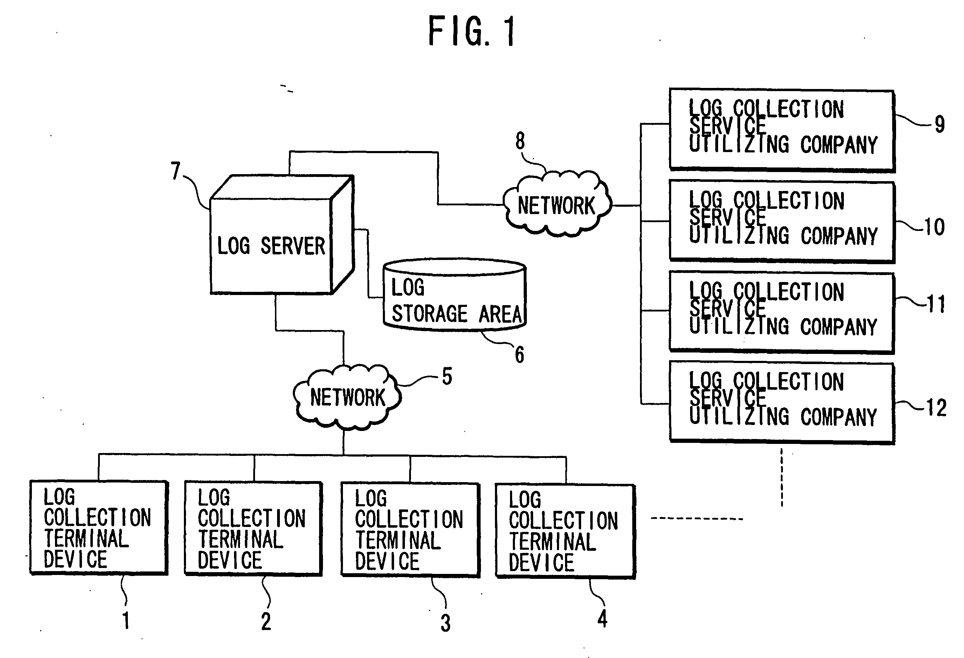

FIG.1 illustrates the whole configuration of the log collecting/analyzing system. Log collection terminal device devices **1** to **4** of being client terminal device devices to which client side software and client side hardware for collecting log are provided are connected to network **5** respectively. It should be noted that the log collection terminal device is capable of being added to increase without limiting the number of piece by sharing the network **5**.

In the log collecting/analyzing system illustrated in FIG.1, the log collection terminal device devices **1** to **4** collect logs and then store therein logs temporarily. The log collection terminal device devices **1** to **4** transmit log information that is collected and stored therein temporarily by the log collection terminal device devices **1** to **4** toward log server **7** via the network **5**. The log server **7** is provided with log storage area **6** for storing therein received log information. Then, the log server **7** stores the log information transmitted from the log collection terminal device devices **1** to **4** in the log storage area **6**. In addition, the log server **7** takes out the log information stored in the log storage area **6** and then executes analysis processing of the log information, before storing the analyzed result in the log storage area **6** again.

It should be noted that respective procedures for analysis processing executed by the log server **7** are defined by log collection service utilizing companies **9** to **12**. In addition, design and mounting are established so that collection program when conducting log collection and analysis processing correspond to log collection side and log analysis side respectively.

Here, consideration is made in connection with the case that the log collection service utilizing companies **9** to **12** require analyzed result of log. At this time, to begin with, the log collection service utilizing companies **9** to **12** input acquisition requirement of the analyzed result to the log server **7** via the network **8**. The log server **7** which has received the acquisition requirement from the log collection service utilizing companies **9** to **12** authenticates the log collection service utilizing companies **9** to **12** connected to the network and then the log server **7** adopts or rejects companies **9** to **12** on the basis of authentication result, after that, the log server **7** transmits log analyzed result to the authenticated companies. It should be noted that a plurality of log collection service utilizing companies are connectable to the log server **7** via the network **8**. Then, the log server **7** is capable of transmitting log analyzed result toward any of the log collection service utilizing companies **9** to **12** that are authenticated to be connected to the log server **7** via the network **8.**

### Log collection terminal device (Client Side)

### Configuration of Log collection terminal device

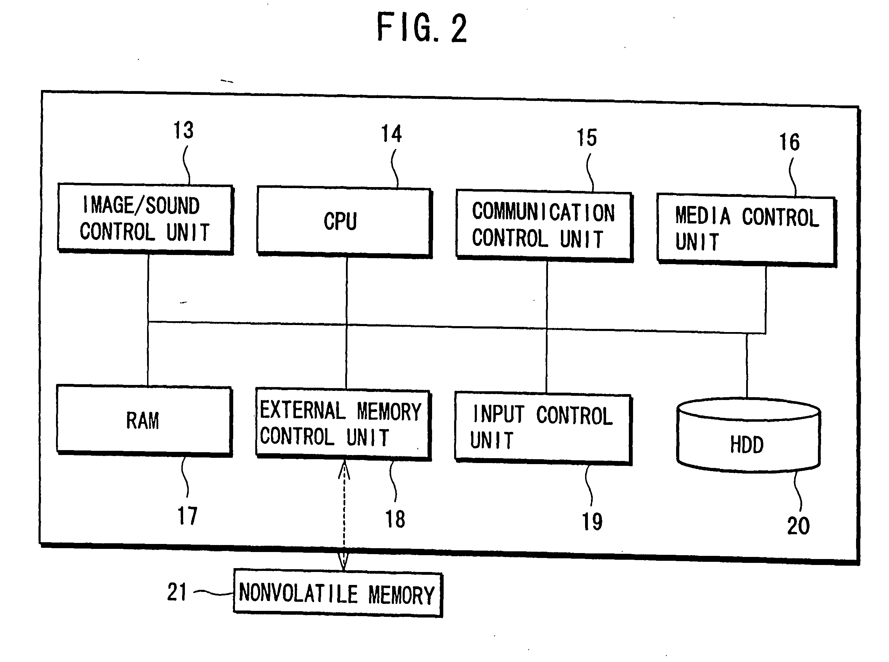

Next, following description is one in which configuration of the log collection terminal device devices **1** to **4** will be explained. FIG.2 illustrates internal configuration of one log collection terminal device. The log collection terminal device comprises an image/sound control unit **13**, CPU (central calculation processing unit) **14**, a communication control unit **15**, media control unit **16**, RAM **17**, external memory control unit **18**, input control unit **19**, HDD (magnetic recording medium) **20**, as principal configuration elements, in which these respective elements are connected with each other via bus.

The image/sound control unit **13** controls image output for monitor unit that is not illustrated and voice output for speaker and so forth or input from video camera and microphone. The CPU **14** controls total operation of the log collection terminal device. The communication control unit **15** that is connected to the network **5** illustrated in FIG.1 controls communication of being executed between the communication control unit **15** and the network **5**. The media control unit **16** controls media drive which is not illustrated, in that the media control unit **16** inputs therein signals from external recording media such as CD-ROM and/or DVD-ROM and so forth equipped with the media drive or the media control unit **16** causes the external recording media to write signals.

The HDD **20** records various kinds of programs containing program for realizing log collection processing of the present embodiment and/or various kind of data. The RAM **17** stores therein program read out from the HDD **20** and/or data utilized on the occasion of execution of various kinds of processing. The external memory control unit **18** which is connected to nonvolatile memory **21** existing at external part of the log collection terminal device and then the external memory unit **18** controls transmission/reception of the data as well as write/read of the data between the external memory control unit and the memory **21**. The input control unit **19** controls input units to be user interface such as keyboard, mouse, and so forth that are not illustrated.

### Flow of Processing at the Time of Log System Utilization according to Log collection terminal device

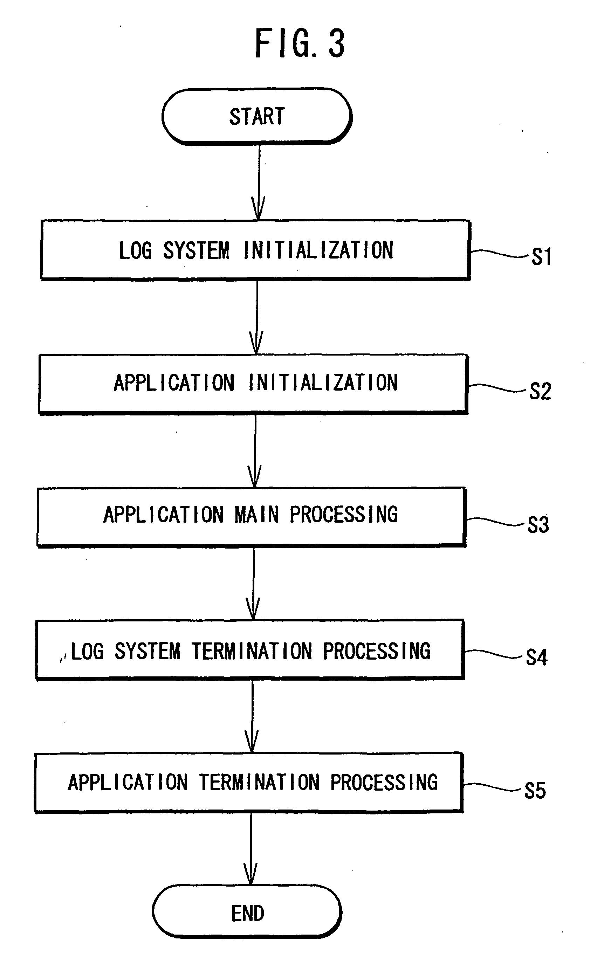

Next, flow of processing (principally, processing of application part according to the present invention) at the log collection terminal device will be explained using FIG.3. It should be noted that processing illustrated in FIG.3 is one that is mainly achieved by function of the CPU mounted on the log collection terminal device. First, as processing of STEP **S1,** the log collection terminal device provides initialization of log collecting/analyzing system illustrated FIG.1 in order to permit utilization of the log collecting/analyzing system. In this initialization, judgments are made in which the log collection terminal device ascertains log user in order that the log collection terminal device uses the log collecting/analyzing system illustrated in FIG.1, and the log collection terminal device judges whether the log collection terminal device is capable of using the log collecting/analyzing system illustrated in FIG.1, and so forth. When completing the processing, in the log collection terminal device, initialization of application is executed as processing of STEP **S2**.

When completing the initialization of the application, the log collection terminal device provides main processing (application main processing) of the application as processing of STEP **S3**. It should be noted that the application main processing will be described later. Then, the log collection terminal device, when completing the application main processing, executes processing in order to terminate utilization of the log collecting/analyzing system illustrated in FIG.1 as processing of STEP **S4**. According to this termination processing, the log collection terminal device stores log information maintained in the RAM **17** for the sake of the log collecting/analyzing system into the HDD **20** and so forth, further the log collection terminal device conducts release of resources that are used for the log collecting/analyzing system. After that, the log collection terminal device conducts termination processing of the application of the present embodiment as processing of STEP **S5**. After that, the log collection terminal devices **1** to **4** become condition in which the log collection terminal device devices **1** to **4** are capable of being terminated.

### Initialization of Log collection terminal device for the sake of Utilization of Log Collecting/Analyzing System

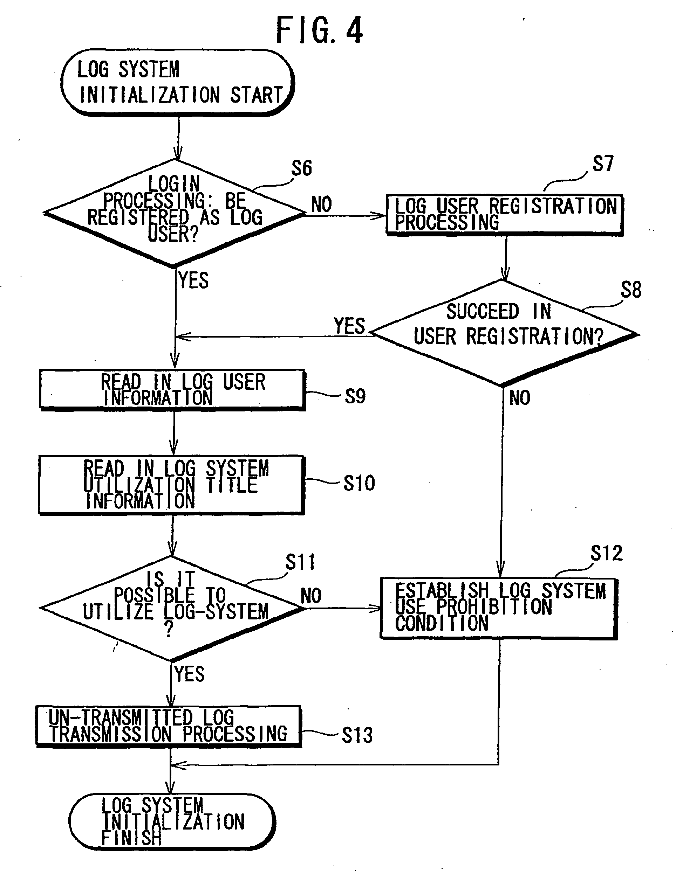

Next, following description is one in which detail of processing for the sake of utilization of the log collecting/analyzing system of being conducted in STEP **S1** of FIG.3 is explained. FIG.4 illustrates a flowchart for initialization processing of the log collection terminal device for the sake of utilization of the log collecting/analyzing system. First, the log collection terminal device conducts login processing of the log user as processing of STEP **S6.** This login processing is necessary processing for identifying the user who uses the log collecting/analyzing system, and the processing informs the information concerning the user thus the user is grasped.

In ascertainment processing of STEP **S6**, when the user is not registered as a log user, log user registration processing is conducted in processing of STEP **S7**. In this registration, the log collection analysis terminal device ascertains whether double registration is conducted in this registration, or whether the user is unfair user, in such a way as to compare information registered beforehand with information input by the log user registration, and so forth. Then, in processing of STEP **S8,** when succeeding user registration, the log collection terminal device continues log system initialization. In this processing of STEP **S8**, user registration is not made by factor of some kind, the log collection terminal device interrupts log system initialization and then the log collection terminal device executes log system no use condition setting at processing of STEP **S12**, thereafter, the log collection terminal device concludes the log system initialization.

On the other hand, in processing of STEP **S8**, when registration ascertainment as log user is succeeded, the log collection terminal device inputs therein log user information stored in, for instance, the HDD **20** and/or the nonvolatile memory **21** as processing of STEP **S9,** further, the log collection terminal device inputs therein log system utilization title information as processing of STEP **S10.**

Then, the log collection terminal device ascertains whether the log system can be utilized as processing of STEP **S11.** It should be noted that this ascertainment is conducted to control period of using the log system. For instance, in cases where certain log service is established so as to provide service only one month, if, for instance, service period of the log collecting/analyzing system is concluded, it becomes not possible to transmit log to the log server **7**, therefore, the log collection terminal device ascertains whether the log collecting/analyzing system is capable of being used in order to forestall occurrence of such condition.

When judgment is one in which the log collecting/analyzing system can not be utilized in the judgment of STEP **S11,** operation of the log collection terminal device proceeds to processing of STEP **S12,** and then setting the log system into use prohibition condition. This use prohibition condition is that the log collection terminal device overrides records of log in the log collecting/analyzing system, and function of transmission of log for the log server **7**, and so forth. Thus, when the log collecting/analyzing system is set to the use prohibition condition, an application that employs the log collecting/analyzing system is capable of executing processing in the same way as that of normal function regardless of whether the log collecting/analyzing system is effective or ineffective, however, specific processing of recording of logs and/or transmitting of logs are not executed. Namely, the log collection terminal device realizes control of the use prohibition condition in such a way as to internally control whether processing of recording log and transmitting log is reflected.

On the other hand, when providing judgment that the log collecting/analyzing system is capable of being used at STEP **S11,** the log collection terminal device executes transmission processing of logs that are not transmitted yet as processing of STEP **S13.**

The present invention is characterized in that it is possible to realize function of collecting log in off-line environment. Processing of STEP **S13** relates to the function of collecting in off-line environment. Namely, when the log collection terminal device is always connected to the network **5,** it is possible to process surely transmission of the log to the log server **7,** while when the network **5** is interrupted, or it is not possible to transmit log information for the log server **7** side caused by obstacle of some kind, the log collection terminal device stores log information temporarily, and then, the log collection terminal device transmits log again when the network **5** or the log server **7** is restored to normal condition. Processing of STEP **S13** is one in which retransmission function of the log is realized.

### Record of Log User Information

Next, as for information registered as log user information and registered position thereof are explained.

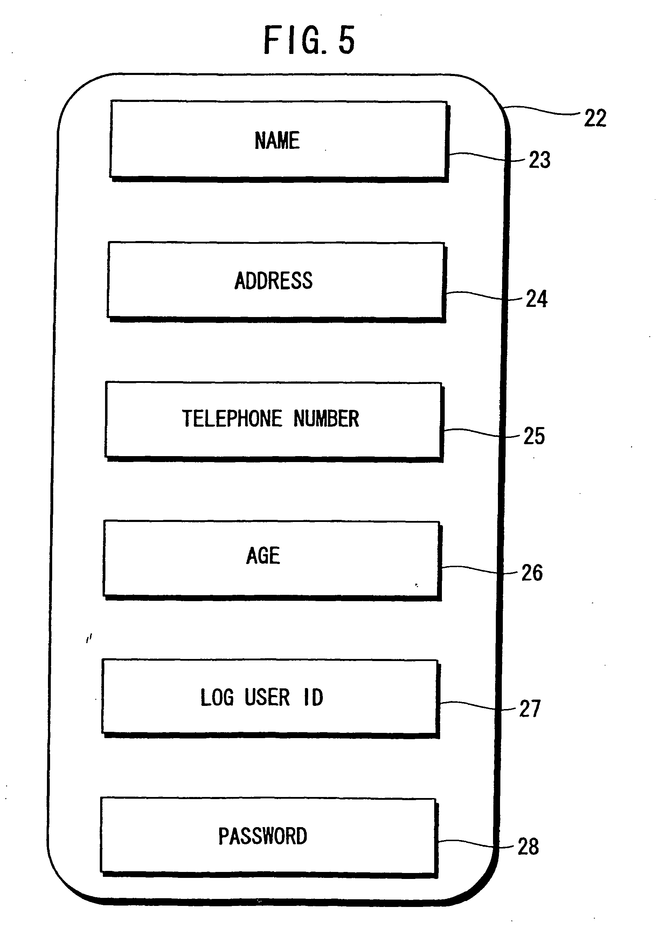

If position of recording log user information is in nonvolatile recording media on the log collection terminal device, whichever position is recorded position, the position is permitted. For instance, it is possible to record the log user information on the nonvolatile memory **21,** HDD **20** illustrated in FIG.2, or on writable media controlled by the media control unit **16.** However, when convenience and/or confidentiality are taken into consideration, recording on the nonvolatile memory **21** is effective because recording on nonvolatile memory is capable of being easily utilized to login processing at another log collection terminal device. It is assumed in the present embodiment that the log user information is recorded on the nonvolatile memory **21.** In the present embodiment, each user is assigned a nonvolatile memory **21** and each user uses the nonvolatile memory **21,** whereby the log collection terminal device is capable of identifying respective log users. FIG.5 illustrates one example of log user information. The log user information includes, for instance, name **23,** address **24,** telephone number **25,** age **26,** log user ID **27,** and password **28.** The password **28** is one that is established at the time of log user registration, in which input of the password **28** is desired when the log user performing login, then, it becomes possible to judge as identical person when the password **28** is correct. It is assumed in the present embodiment that the nonvolatile memory **21** of being recorded the log user information is used as authentication card. Hereinafter, the nonvolatile memory **21** is called as authentication card **21.**

### Login Processing

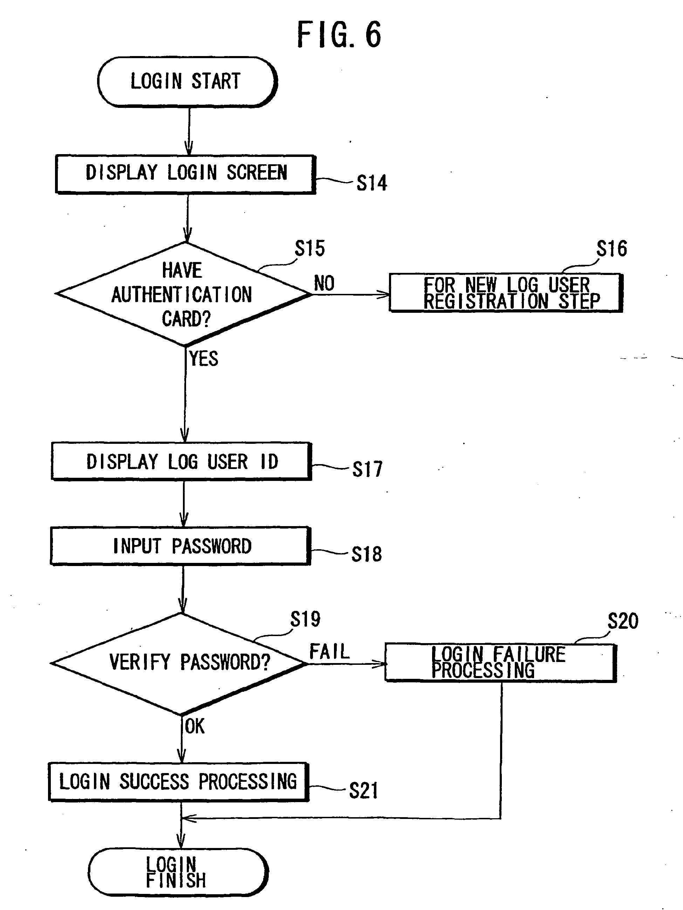

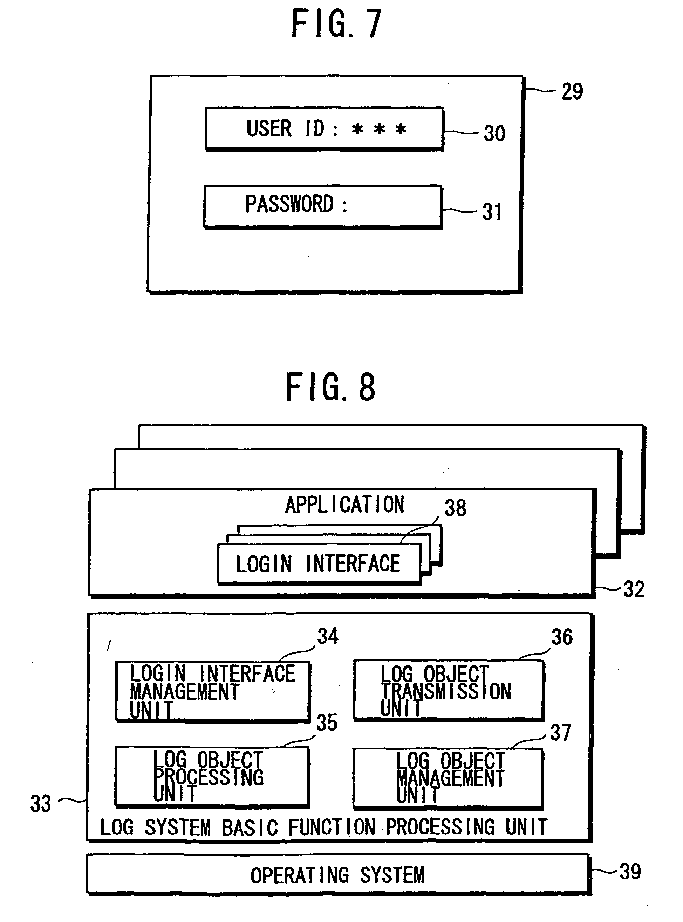

Next, as for login processing in STEP **S6** illustrated in FIG.4 is explained. FIG.6 is one in which flowchart of this login processing is illustrated. First, as processing of STEP **S14,** the log collection terminal device allows a monitor unit that is not illustrated to display a login screen **29** as illustrated in FIG.7 for example. The log collection terminal device allows login screen **29** to display user ID display column **30** and password input column **31.** The user ID display column **30** displays ID that is recorded in the authentication card **21** (nonvolatile memory **21**). The password input column **31** is one to which the log user inputs the password **28.**

In addition, the log collection terminal device ascertains whether the log user has the authentication card in STEP **S18** at the same time of processing of STEP **S14.** Namely, the log collection terminal device judges whether the log user has the authentication card **21** depending on detection whether the authentication card **21** is connected to the external memory control unit **18,** and whether the log user information is recorded within the authentication card **21.**

In STEP **S15,** when the log collection terminal device judges that the log user does not have the authentication card **21,** the log collection terminal device regard the log user as new one, and then allowing processing of this state to move toward new registration processing of STEP **S16.** While, when the log collection terminal device judges that the log user has the authentication card **21** at STEP **S15,** the log collection terminal device judges that the log user have been already registered as the log user, and then the log collection terminal device allows the processing of this state to move toward processing of STEP **S17.** When proceeding to processing of STEP **S17,** the log collection terminal device inputs therein log user ID **27** from the authentication card **21** and then allowing the log user ID **27** to be displayed on the user ID display column **30.**

Next, the log collection terminal device, in STEP **S18,** takes in password **28** input from the log user, further the log collection terminal device, in STEP **S19,** conducts verification of the password **28.** It should be noted that the password **28** is input via input unit such as keyboard and so forth. When verification result of the password **28** in STEP **S19** is that password input from the log user does not agree with the registered password, the log collection terminal device allows the processing of this state to move toward processing of STEP **S20,** and then conducting login failure processing. In this login failure processing, it is possible to urge input of the password **28** again or it is possible to execute processing of terminating it as login failure as it is. It should be noted that, it is assumed in the present embodiment that login is terminated as login failure processing of STEP **S20.**

When verification result of the password **28** in STEP **S19** is that password input from the log user agrees with the registered password, the log collection terminal device judges that user authentication is completed, and then executing login success processing as processing of STEP **S21,** after that, the log collection terminal device terminates the login processing. It should be noted that in the login success processing in STEP **S21,** it could be considered that, for instance, screen display for indicating success in login, and so forth.

### System Configuration of Log collection terminal device

FIG.8 illustrates connection of programs for realizing log collection and log transmission in the log collection terminal device. In the present embodiment, there is provided a login interface provided with function for forming basic structure of the log and function for generating desired log information from the basic structure of the log which the login interface hierarchically constructs log, and then transmitting hierarchically constructed log information to the log server **7,** or independently managing the log information in every application program.

Program illustrated in FIG.8 comprises an application **32** for utilizing the log system, a log system basic function processing unit **33** for providing basic function of the log collecting/analyzing system and an operating system **39** for operating the log collecting/analyzing system, in which upper and lower side relationship illustrated in FIG.8 means that function positioned at upper order utilizes function of low order.

The log system basic function processing unit **33** is separated into some processing units. Login interface management unit **34** manages login interface **38.** The login interface **38** which is independently defined by the log collection service utilizing companies **9** to **12** for utilizing collected log information executes processing for outputting log that is specialized in accordance with respective log service. When the application **32** requires the login interface **38,** the login interface management unit **34** initializes desired login interface **38** to provide.

On the inside of these programs, the log is managed in every unit of log object, and log object processing unit **35** is a unit for controlling function of the log object as being basics of the log. Log object transmission unit **36** is a unit for controlling processing of transmitting log information to the log server **7.** Log object management unit **37** is a unit for managing log itself such as storage area of log object, elimination processing thereof and so forth. For instance, when executing storage of logs, the log object management unit **37** specifies appropriate position for the storage. Also, on the occasion of elimination of unnecessary log, the log object management unit **37** controls the elimination.

### Configuration of Log Object

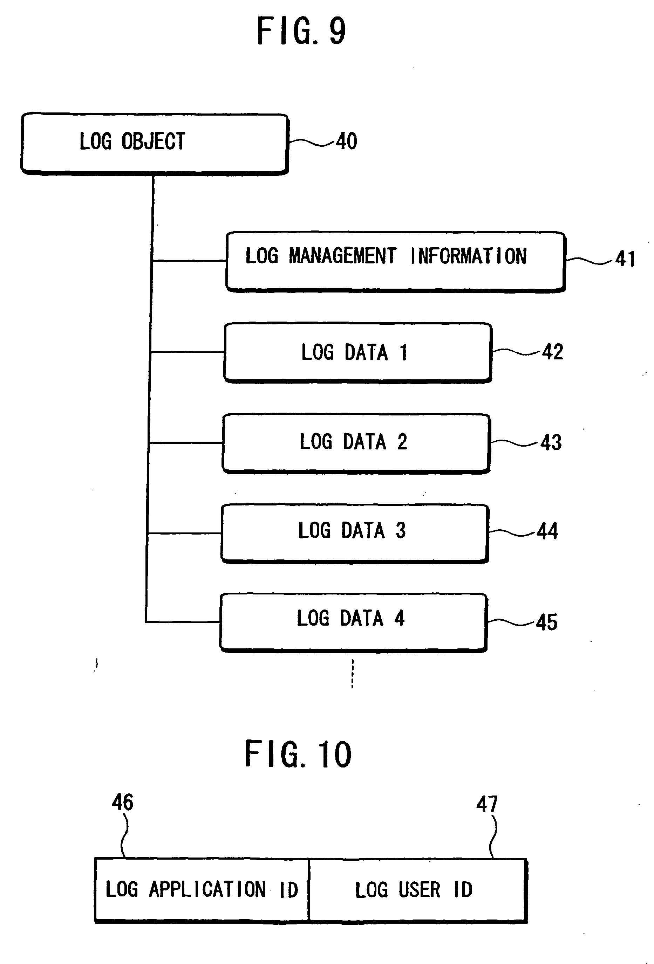

FIG.9 illustrates configuration of log object **40.** Log object **40** is composed of log management information **41** and log data **1** to **4 (42** to **45).** The log management information **41** is one in which information for informing background of the log object **40** is recorded. The log data **1** to **4** (**42** to **45)** are ones in which specific log information generated by the login interface **38** is recorded. In addition, the log object **40** is capable of including a plurality of log data. It should be noted that FIG.9 illustrates one example thereof.

FIG.10 illustrates internal configuration of the log management information **41.** The log management information **41** is composed of log application ID **46** and log user ID **47.** The log application ID **46** is identification information that is utilized in order to specify application of controlling to use the log collecting/analyzing system. In addition, the log user ID **47** indicates identification information of being utilized in order to indicate that the log belongs to which user.

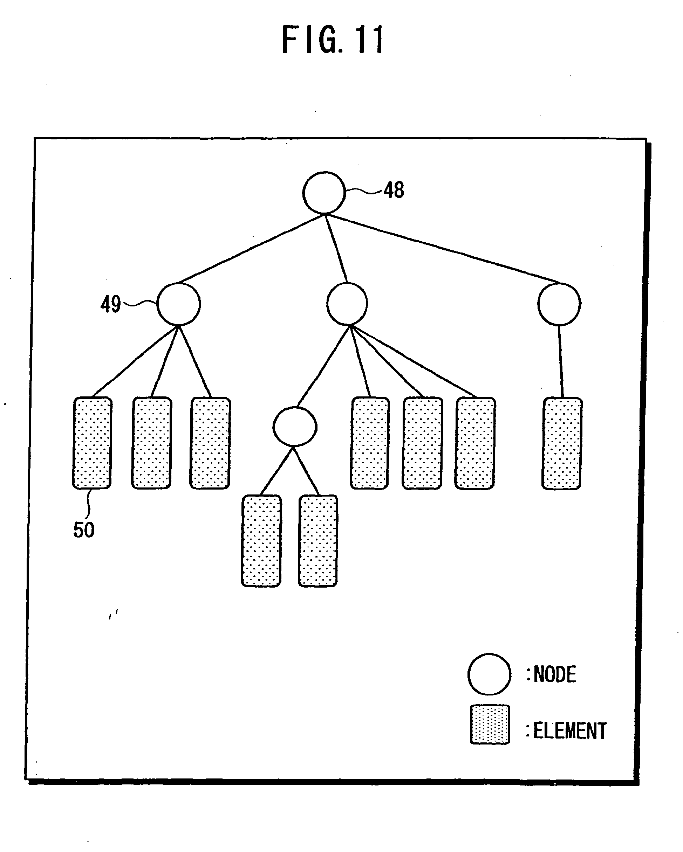

Next, as for configuration of the log data **1** to **4** (**42** to **45**), which is explained using example of FIG.11. FIG.11 illustrates configuration of the log data **1** (**42**), and such log data **1** (**42**) is divided into two of node and element with tree structure. The node is capable of including nodes or elements. It should be noted that the node can not be utilized as terminal device. While, the element is capable of being utilized as terminal device and capable of including arbitrary data. The node **48** is root node, and the front of log data refers to front node of the root node **48.** The node **49** is one for including element **50** positioned at low order.

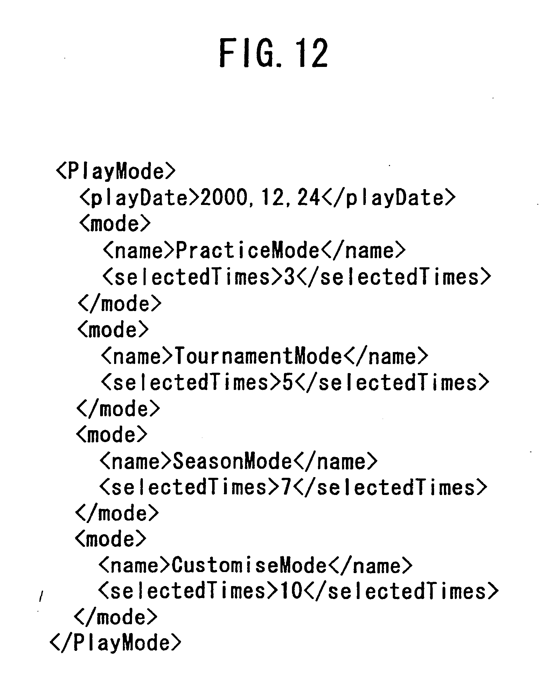

The log data **1** to **4** (**42** to **45**) are capable of adopting arbitrary log structure due to management of such tree structure. Here, in the present embodiment, XML (eXtensible Markup Language) is utilized as specification for defining this tree structure. FIG.12 illustrates one example thereof. This FIG.12 illustrates example of being recorded selected play mode and the number of utilization of the play mode in a certain application such as video game and so forth. Tag <play Date> in FIG.12 indicates data when the user takes the log, and tag <mode> records play mode name that is used in this case (indicated by tag <name>) and the number of use thereof (indicated by tag <selected Times>). This example indicates that record is one in which Practice Mode is used three times at 2000, 12, 24.

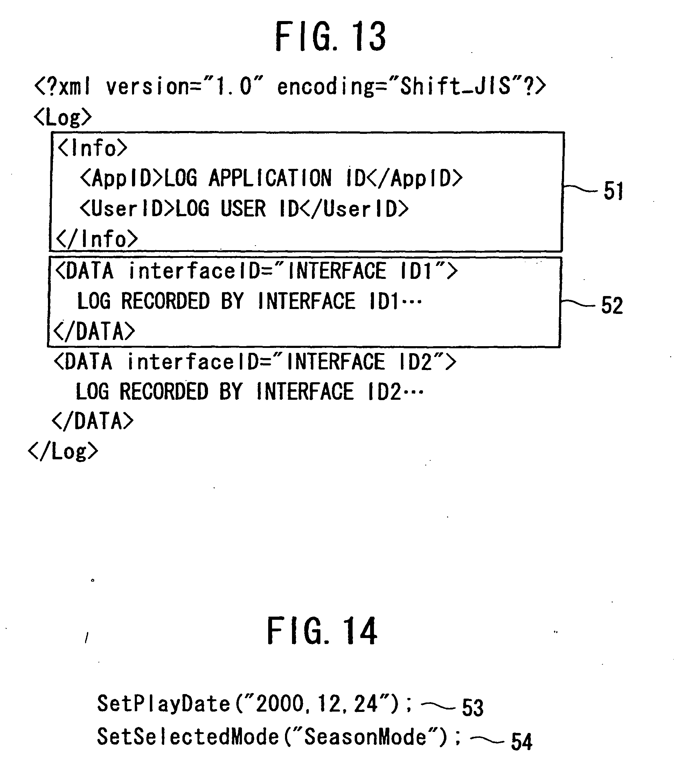

When extracting data from this log data, it is possible to retrieve desired data by following the tag. Here, FIG.13 illustrates example of the case in which log object illustrated in FIG.9 is expressed as XML. In an example of FIG.13, <info> tag describes both log application ID (hereinafter referred to as log appli. ID **46)** for indicating log application program (hereinafter referred to as log appli.) that generates the log object and log user ID **47** indicating user to become object of the log.

In addition, the log related to the login interface is described in <DATA> tag **52.** Namely, the <DATA> tag **52** as being example illustrated in FIG.13 describes that this tag is one which is generated by login interface indicated by interface **ID1,** further, on the inside of the <DATA> tag **52**, which describes the log itself constituted by login interface indicated by the interface **ID1.** The shape of the <DATA> tag **52** at this time becomes one illustrated in FIG.11. Accordingly, if following these tags, it becomes possible to retrieve desired data. It should be noted that these ID are utilized in order to homologize analysis interface used on the occasion that analysis of the log is executed onto the log at the log server **7** later.

### Relationship between Login interface and Service

Now, tree structure of the log illustrated in FIG.11 is also capable of being output directly from respective applications, however, when preparing such configuration in every application, there may be problems that programs for forming tree structure are redundant, in addition, since pre-arrangements for recording log is large, development efficiency decreases. In the present embodiment, since development of program for forming tree structure in every respective application causes bad efficiency, therefore, the present embodiment enhances development efficiency of the application by providing program for forming tree structure as library.

In order to solve the above subject, the present invention separates functions such as preparation, storage and so forth of basic structures of the log as basic function, further designing and mounting specific recorded part of the log at the application side that utilizes its basic function as login interface, whereby the present invention realizes effective log collecting/analyzing system capable of flexibly coping with various kind of uses.

Namely, in the present embodiment, the login interface **38** illustrated in FIG.8 provides above-described log data **1** to **4.** The login interface **38** described in the present embodiment is a program that is designed and mounted in order to collect and record logs, in which the login interface **38** functions as API (Application Programming Interface) between the application **32** illustrated in FIG.8 and the log system basic function processing unit **33.** This library with the login interface **38** mounted allows log basic library that is one for preparing basic tree structure on the inside thereof to access, in which the log basic library outputs the result and receives in accordance with determined format, in addition, the log basic library hierarchically constructs log and then designing and mounting specialized log for the application program.

Here, the login interface **38** is specifically designed depending on necessary log contents, and one example thereof is illustrated in FIG.14. In the login interface **38** illustrated in FIG.14, API **53** is one in which date of use is recorded. At the side of the application **32,** it becomes possible to generate <Play Date> tag by accessing this API **53.** In addition, the application **32** becomes possible to prepare <mode> tag and the following structure bodies by accessing the API **53.** It should be noted that, as for this API **54,** device is slightly added in this mounting in that when mode with the same name is used, the number of times of use is added to record by 1. Thus, according to mounting of the login interface **38** of the present embodiment, the side of the application **32** can manage data desired to record, and also the side of the login interface **38** is capable of managing the data desired to record, thus any of them is capable of recording necessary data.

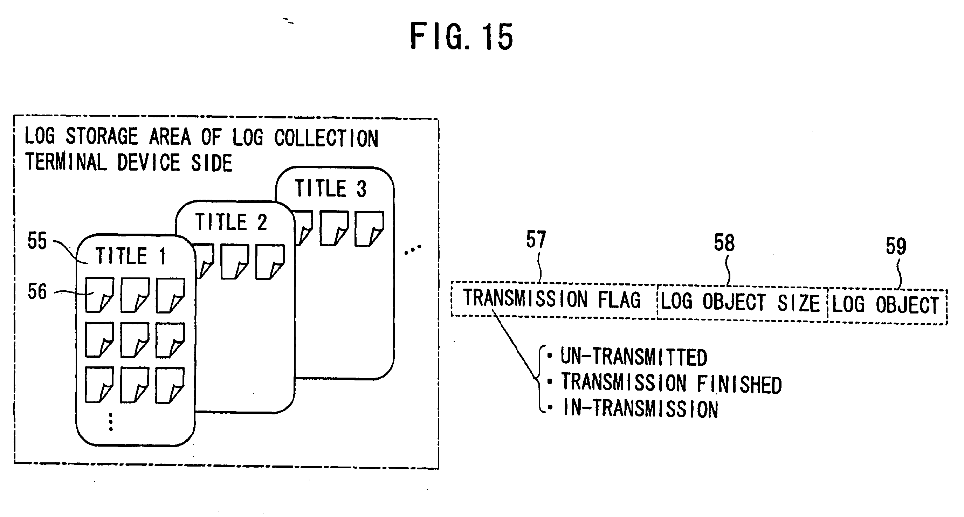

Next, as for storage method of above described log object including logs will be described using FIG.15. Log objects are recorded in nonvolatile storage area such as HDD **20,** flash memory and so forth. In the present embodiment, log objects are recorded in authentication card **21.** In addition, the log object is managed in every application unit in which the log object is used. Namely, the log object is managed on its storage area in every application with shape of title **1,** title **2,** ··· illustrated in FIG.15, in which the logs are registered to those respective areas. For instance, log storage area **55** illustrated in FIG.15 is managed for the sake of application of title **1,** and log **56** is registered to the area **55** in that the application utilizes the log **56.**

The log object is stored with shape of structure as illustrated in right side of FIG.15. Namely, the log object is constituted by a transmission flag **57,** a log object size **58** and a log object **59.** The transmission flag **57** is one that records conditions when transmitting logs to the log server **7,** thus the transmission flag **57** has three conditions of, for instance, un-transmitted, finished transmission and in transmission. The un-transmitted means that the log is not transmitted to the log server yet. The finished transmission means that the log is already transmitted to the log server **7**. The in transmission means that transmission of the log is not completed to the log server **7** caused by interruption of the transmission by cause of some kind in the last time transmission of the log. When transmitting the logs, the log of un-transmitted or the log in transmission is transmitted to the log server **7.** In addition, the log storage area **55** increases to accumulate the logs, however, about the finished transmission logs, it is possible to remove the logs of being finished transmission. For this reason, memory areas such as HDD **20,** flash memory and so forth are not pressured.

### Termination Processing of Log System

Next, as for termination processing at the side of log collection terminal device will be explained. In the side of the log collection terminal device, when application is made to terminate, first, it is necessary to terminate utilization of the log collecting/analyzing system. This processing is necessary one in order that the log is recorded without contradiction. For this reason, the log collection terminal device allows utilization termination processing of the log collecting/analyzing system to execute before termination processing (processing of STEP **S5**) of the application as processing of STEP **S4** illustrated in FIG.3. Specifically, the log collection terminal device forcibly stores therein the log object in use, and/or executes use termination processing of log storage area, and so forth in safety. The log collection terminal device executes termination processing of the log application itself at STEP **S5** after termination of these processing, and thus terminating operation of the log collection terminal device itself.

### Log Server (Server Side)

### Configuration of Log Server

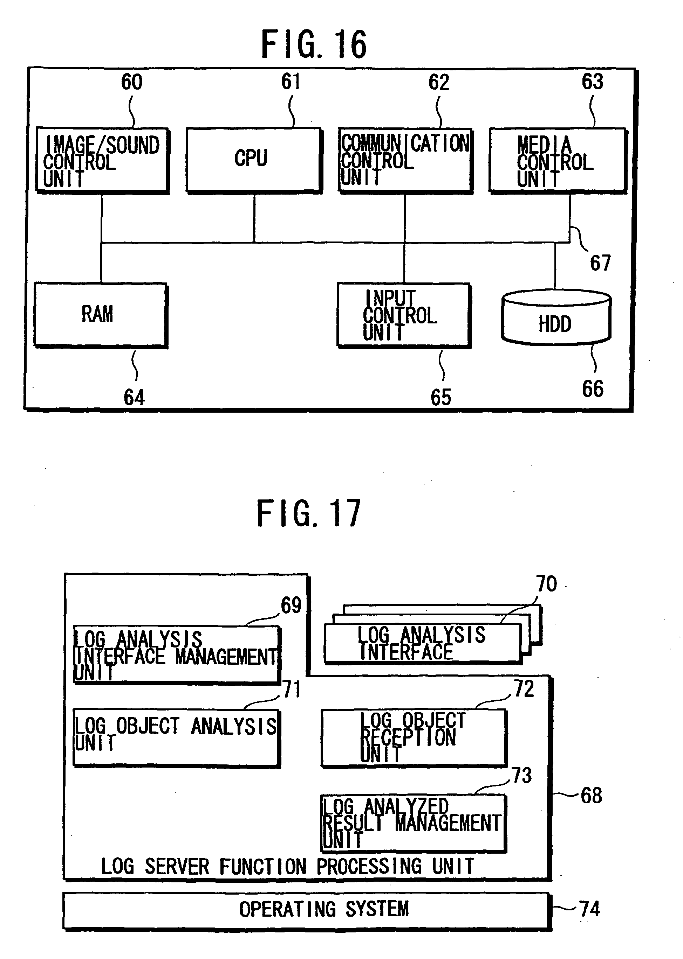

Next, as for configuration of log server **7** side will be explained. The log server **7,** as illustrated in FIG.16, is composed of an image/sound control unit **60,** a CPU **61,** a communication control unit **62,** a media control unit **63,** a RAM **64,** an input control unit **65** and a HDD **66** as principal configuration elements, in which these elements are connected via bus **67.**

The image/sound control unit **60** controls image output for monitor unit that is not illustrated and voice output for speaker and so forth or controls inputs from video camera and microphone. The CPU **61** takes charge of control for program on the log server **7** and/or control of equipment connected by the use of bus **67.** The communication control unit **62** is connected to the networks **5, 8** illustrated in FIG.1 and then the communication control unit **62** controls communication executed between the networks **5** and **8** and another part, and being utilized reception of the logs and so forth. The media control unit **63** controls media drive that is not illustrated, and then the media control unit **63** inputs therein signals from external media such as CD-ROM, DVD and so forth equipped with the media drive, in addition, the media control unit **63** allows signal writing and so forth to be executed to external media such as CD-RW and so forth. The RAM **64** is a unit for storing program, data and so forth for operating at the log server **7.** The input control unit **65** controls input unit to be user interface such as keyboard, mouse that are not illustrated at the log server **7.** The HDD **66** is large capacity storage area for recording log information managed at the log server **7** and/or for recording analyzed result and so forth.

### System Configuration of Log Server

Next, FIG.17 illustrates outline configuration of program for realizing reception-analysis of logs in the log server **7.** In the present embodiment, the log server independently manages log information received from the log collection terminal device for every individual application program, and then the log server pulls out necessary information from the log information to analyze, after that, the log server stores analyzed result in desired form.

Program illustrated in FIG.17 is mainly provided with an operating system **74,** a log server function processing unit **68** and a log analysis interface **70** and relationship between upper and lower in the drawing means that upper rank section utilizes function of lower rank section. The log server function processing unit **68** is composed of a log analysis interface management unit **69,** a log object analysis unit **71,** a log object reception unit **72** and a log analyzed result management unit **73.**

The log analysis interface management unit **69** manages log analysis interface **70.** Namely, the log server **7** is capable of pulling out the log analysis interface **70** necessary for analysis in such a way as to go through the log analysis interface management unit **69.** The log analysis interface **70** is an interface for analyzing log information received from the log collection terminal device. Such log analysis interface **70** is designed and mounted with form corresponding to the login interface **38** used at the system of log collection terminal device side.

The log object analysis unit **71** analyzes logs received by the log server **7.** The log object reception unit **72** is one that controls function for receiving logs transmitted from the log collection terminal device. The log analyzed result management unit **73** stores therein result of analysis analyzed in the log object analysis unit **71,** in addition, the log analyzed result management unit **73** provides result of analysis to the log collection service utilizing companies **9** to **12**.

### Log Management Database

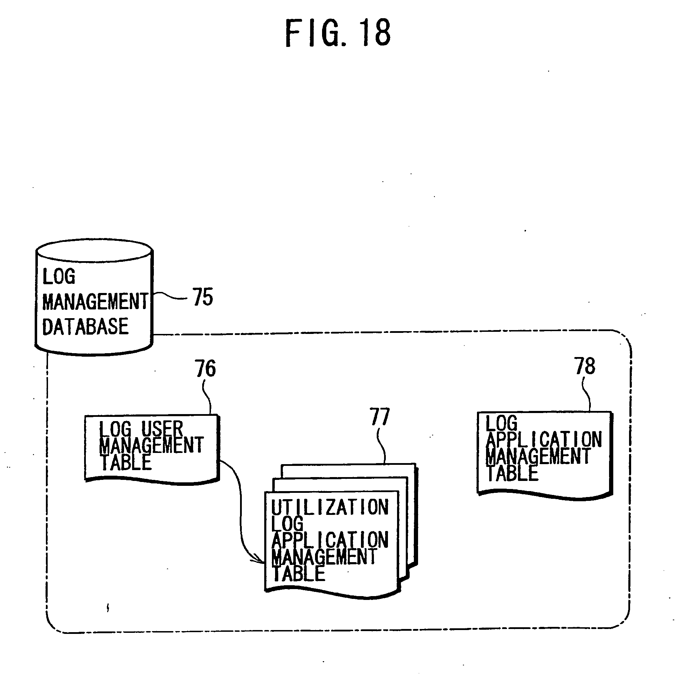

In addition, the above-described log server **7** receives the above-described log and then the log server **7** allows database to be prepared in order to store and manage the result of analysis analyzed by the log server **7.** In the present embodiment, a log management database, a log storage database and a log analyzed result management database are prepared as database. FIG.18 to FIG.23 illustrate configurations of these databases. It should be noted that these databases are managed on the log storage area illustrated in FIG.1.

FIG.18 illustrates outline configuration of log management database to be one of these databases. The log management database is composed of a log user management table **76,** a utilization log application management table **77** and a log application management table **78.**

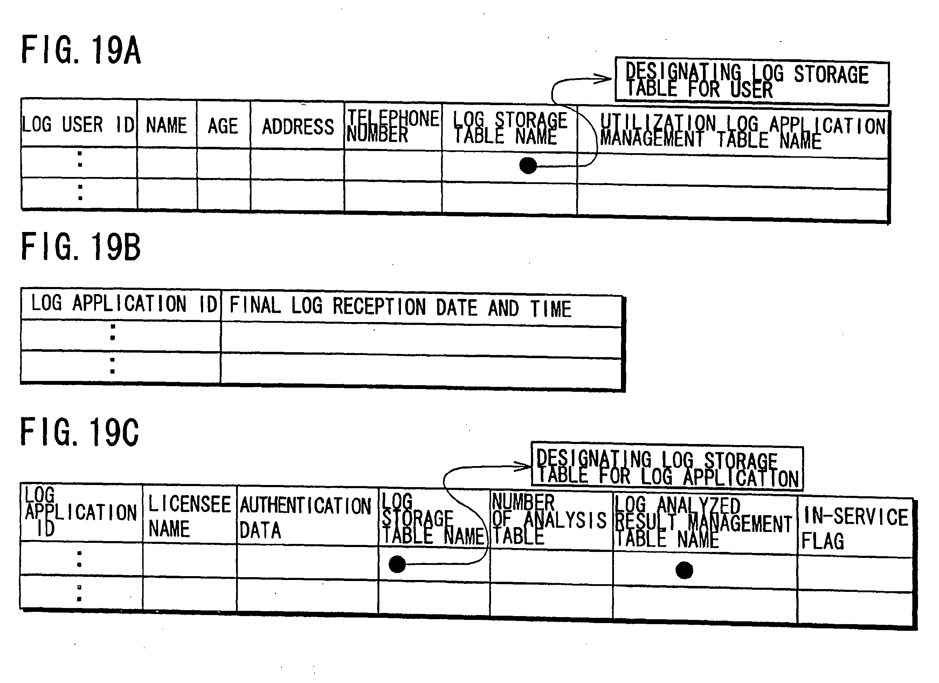

The log user management table **76** manages user information of being subjected to log service. This table contents are constituted from log user ID, name, age, address, telephone number, log storage table name and utilization log application management table name, as illustrated in the log user management table **76** of FIG.19A. Since such name, age, address, telephone number and so forth are items of forming as one example, when detailed information as personal information is desired, it is possible to cope with such case by increasing items if necessary. The log storage table name is one in which when the log server **7** receives the log, storage position of the log is specified within the log storage table name. The log is stored and managed in every log user. The log management information of the log object illustrated in FIG.10 is utilized here. The log appli. ID described in the log object is used in order to classify the log application, in addition, the log user ID is used in order to classify the log users.

The utilization log application management table name illustrated in FIG.19B specifies utilization log application management table **77** in order to manage log application of being used by the user. This utilization log application management table **77** is constituted by the log appli. ID and the final log reception the date and time as illustrated in FIG.19B. The utilization log application management table **77** is prepared in every log user, and the utilization log application management table **77** manages that the log user utilizes from which log application. Accordingly, it becomes possible to immediately know that the log user utilizes which log application by referring to this table. In addition, log user information on the log user management table **76** is prepared by new log user registration. For instance, new log user registration processing in STEP **S16** illustrated in FIG.6 provides the log user information.

The log application management table **78** manages log application of executing log service. The configuration of the log application management table **78** is illustrated in FIG.19C, and the log application management table **78** is composed of log appli. ID, licensee name, authentication data, log storage table name, the number of analysis table, log analyzed result management table name and flag in service. The log appli. ID is number numbered uniquely to application that uses the log collecting/analyzing system. The licensee name indicates a person who prepares the log application or company name thereof. The authentication data is utilized in order to ascertain other person who provides the log on the occasion of providing the log. The log storage table name indicates log storage table for log application in order to manage log registered in log application. The number of analysis table is one which indicates the number of existing how many analyzed result table in the result of analyzing by log application. The log analyzed result management table name manages table that stores log analyzed result, and the log analyzed result management table name is generated in every log application. The flag in service is one which controls whether the log application is capable of being utilized. The flag is utilized in order to indicate service conditions that, for instance, service is already terminated.

### Log Storage Database

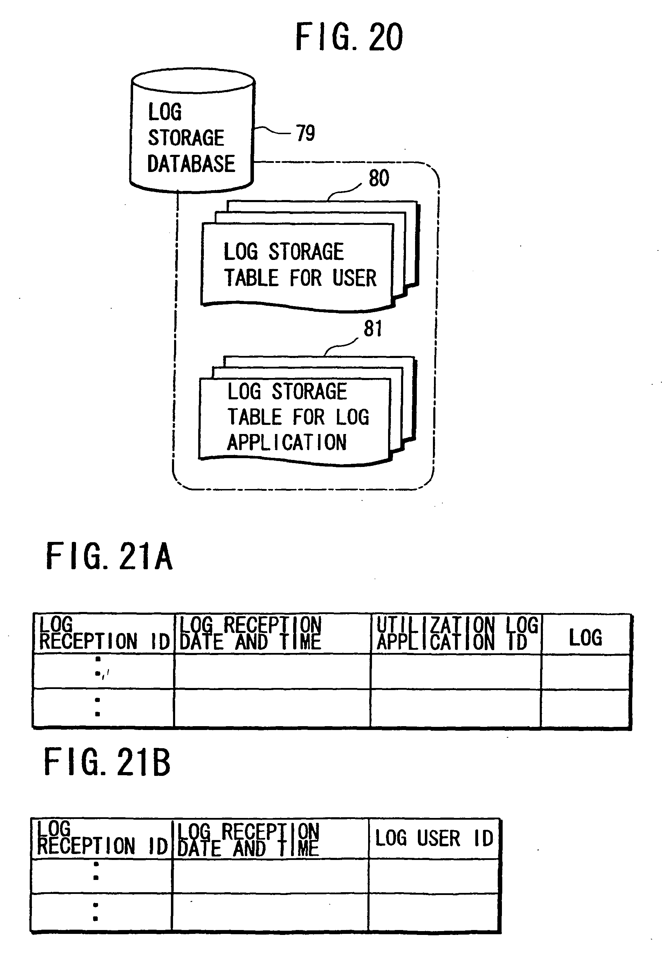

FIG.20 illustrates outline configuration of log storage database **79.** The log storage database **79,** as illustrated in FIG.20, is composed of a log storage table for the user **80** and a log storage table for the log application **81.** The log storage table for the user **80,** when the log user transmits log to the log server **7,** is a position in which the log is stored first. Configuration of the log storage table for the user **80,** as illustrated in FIG.21A, includes a log reception ID, a log reception the date and time, a utilization log application ID and logs. The log reception ID is number numbered uniquely in every log reception. The log reception the date and time is one in which the date and time when the log is received is recorded. The utilization log application ID indicates that recorded log is utilized what log application. Further, the log object itself is recorded in the log shown in FIG.21A.

The log storage table for log application **81** is one that manages log registered in the log application. The log storage table for log application **81** is utilized for analysis of the log. Analysis of the log is executed in every log application, however, determination whether which log is analyzed is made while referring to this log storage table for log application **81.** The log storage table for log application **81** is constituted by log reception ID, log reception the date and time and log user ID as illustrated in FIG.21B. In analysis of the log, it is possible to specify which log of the log storage table for user **80** according to the log reception ID and the log user ID to analyze the specified log.

### Log Analyzed result Management Database

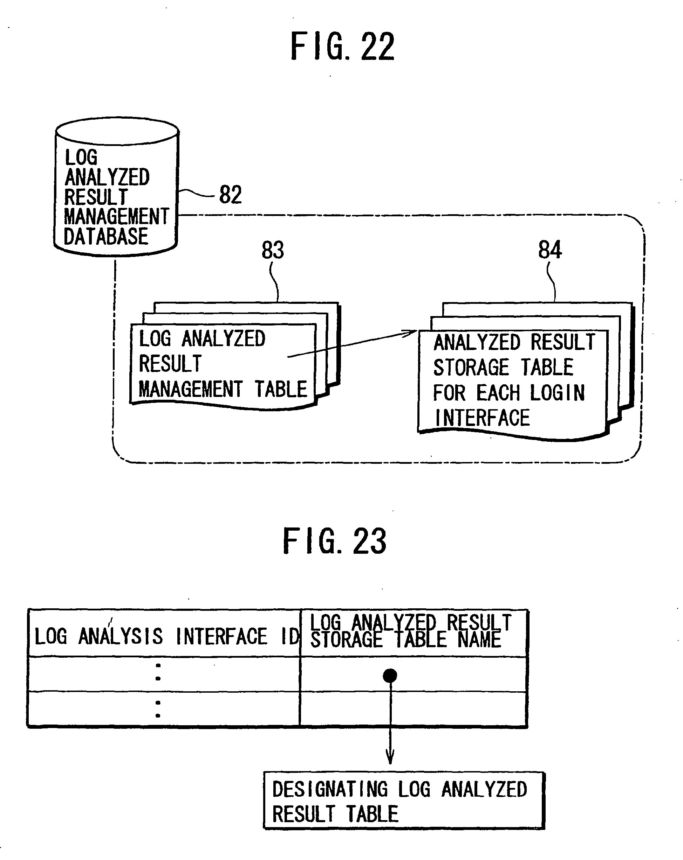

FIG.22 illustrates outline configuration of log analyzed result management database. The log analyzed result management database **82** is composed of log analyzed result management table **83** and analyzed result storage table by login interface **84.** The log analyzed result management table **83,** as illustrated in FIG.23, is composed of log analysis interface ID and log analyzed result storage table name. The log analysis interface ID indicates interface for analyzing the log and corresponds to ID of the login interface **38** used in the side of log collection terminal device. The log analysis interface ID is one to which function for accessing necessary information is mounted, in which necessary information is accessed to be pulled up from the log that is generated by login interface at the side of the log collection terminal devices **1** to **4.**

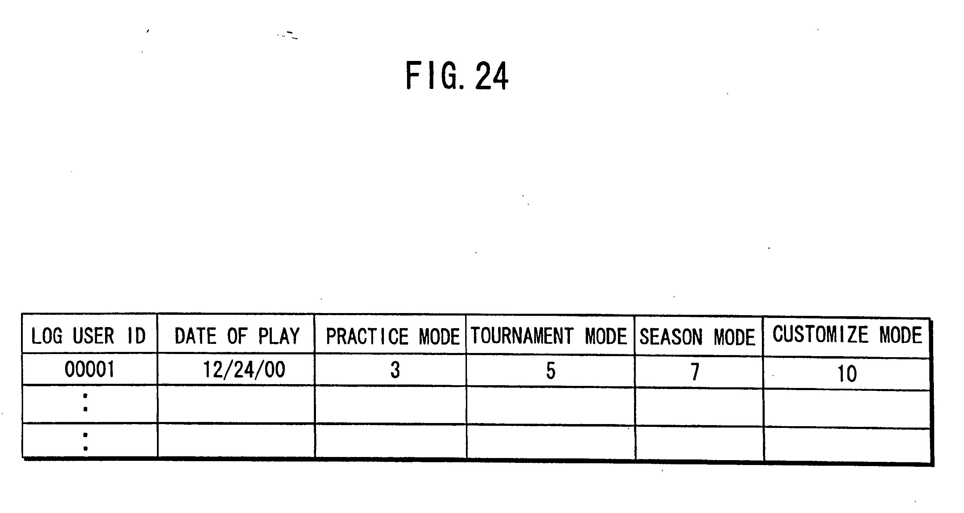

Here, specifically, operation of the log analysis interface will be explained by using example of log data illustrated in FIG.12 and example of the login interface illustrated in FIG.14. In the example, the example describes the case of analysis of the log such that "Date when play is performed", "which mode is selected, and the mode is selected how many times". The log analysis interface extracts first "date of performing play" and "the number of selection of mode" from the log object and then storing the analyzed result in a table illustrated in FIG.24. This table is constituted from log user ID, date of play and four play modes (practice mode, tournament mode, season mode, customize mode). In play date, the play date illustrated in FIG.12 is described. In addition, in respective four play modes, the number of times of playing is described. Further, in log user ID, log user ID of transmitting the log is described. The log analysis interface **70** executes extraction of data, conversion and record processing in order to record such analyzed result on the database.

### Flow of Processing for Log Server System

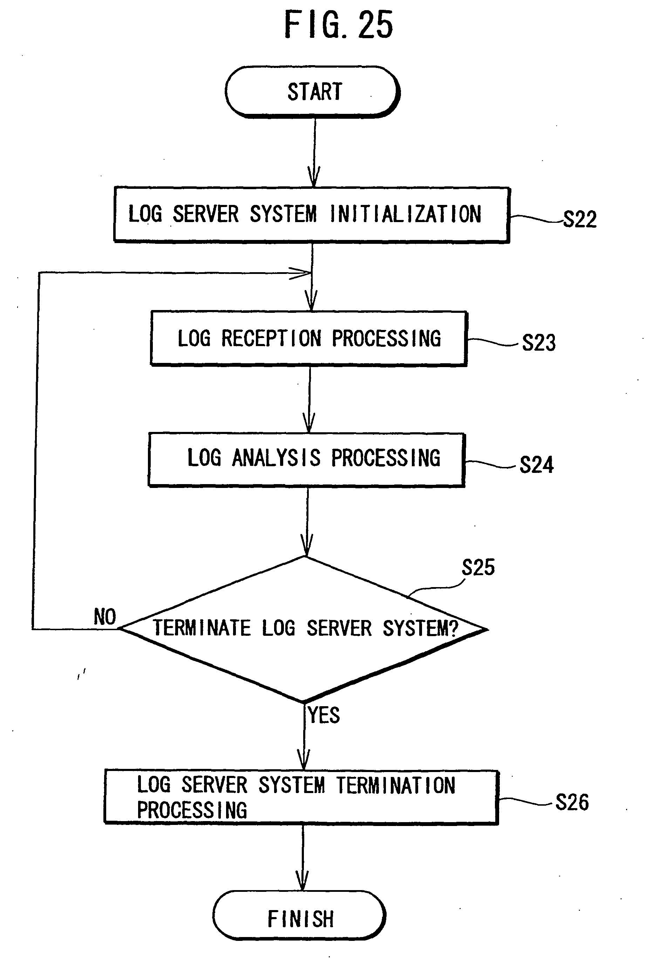

Next, entire flow in log server system will be described referring to FIG.25. It should be noted that processing illustrated in FIG.25 is one that is mainly conducted by CPU **61** of the log server **7.** Firstly, as processing of STEP **S22,** initialization of the log server system is executed. In this initialization, necessary initialization of database manager is executed in order that the log server system uses the database and then necessary initialization of computer resources for the log server **7** that requires the above initialization of database manager. Next, in processing of STEP **S23,** the log server system becomes log reception condition of receiving signal (log information) transmitted from the log collection terminal device. Here, stand-by condition continues until log reception is completed.

Next, in processing of STEP **S23,** when the log server receives the logs, in processing of STEP **S24,** the log server **7** executes analysis processing of received log. Analysis processing of log in STEP **S24** executes respective appropriate analyses according to log analysis interface **70** that specifies contents of the logs. Further, when terminating analysis of the logs, the log server system executes termination check in processing of STEP **S25.** Generally, since the log server system continues operation, the log server system returns to processing of STEP **S23** to come into log reception condition. Here, when being issued termination order, the log server system judges as being log server system termination, then processing proceeding to STEP **S26** to execute termination processing of the log server system here. Termination of the log server system indicates termination of computer resources and database manager that the log server system uses.

It should be noted that flow of processing of the log server system illustrated in FIG.25 is, to the last, one of realized example, therefore, the flow of processing does not limit processing of log server system.

### Flow of Log Reception

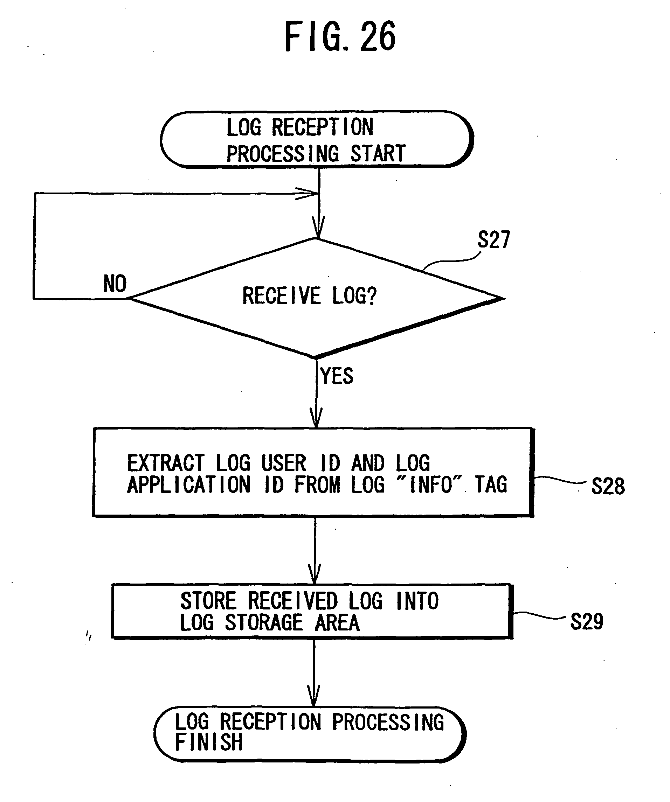

Next, flow in which log server receives log will be explained using flowchart of FIG.26. Firstly, in processing of STEP **S27,** ascertainment is made whether the log server receives logs. When the log server **7** does not receive logs, processing returns to STEP **S27** itself, this repeated processing continues until log is received. When receiving log, processing proceeds to processing of STEP **S28,** to read out of <info> tag included in the log is executed. The <info> tag describes log user ID, and log appli. ID. Next, in processing of STEP **S29,** received log is stored into the log storage area **6** illustrated in FIG.1.

The log storage area **6** is capable of being specified by the log user ID as well as the log appli. ID. Processing reads out first the log user management table **76** of the log management database **75.** Then, identification of the log storage table for user **80** is executed by using the log user ID. Received log is stored in the log storage table for user **80,** and, at this time, log reception ID is obtained. The log reception ID is a number for uniquely determining the log. In addition, utilization log application management table **77** records the date and time of receiving log and the log appli. ID in such a way as to match the former with the later.

Next, processing reads out log application management table **78** of log management database **75**. Then, identification of log storage table for log application by using the log appli. ID. In storage for the table, log reception ID, log reception the date and time and log user ID are recorded. The log reception ID uses log reception ID that is obtained when storing log in the log storage table for user **80.** In addition, also the log reception the date and time uses the same reception the date and time that provided for the user. Log reception processing is completed after above described processing.

### Flow of Log Analysis Processing

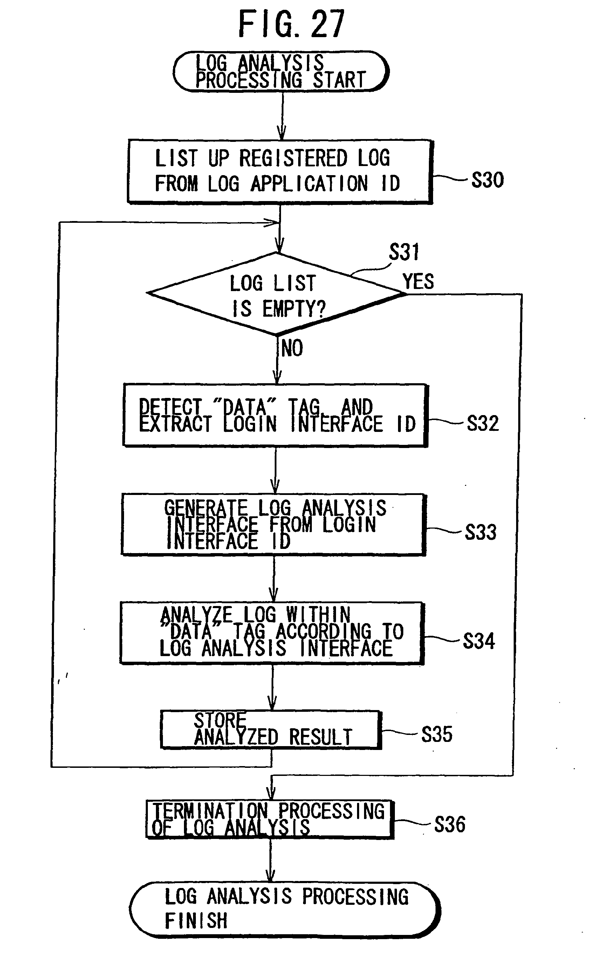

Next, flow of log analysis processing will be explained using flowchart illustrated in FIG.27. Firstly, when the log server **7** receives logs, analysis is started in answer to result that the log is moved to the log storage area **6.** Namely, in processing of STEP **S30,** processing pulls up log list of being registered log on the basis of the log appli. ID. Namely, log list registered according to the log appli. ID is pulled up from the log storage table for log application **81** of the log storage database **79** illustrated in FIG.20. The log list is prepared on the basis of the log appli. ID because analysis in every analysis unit is executed in every log application unit. Next, in processing of STEP **S31,** the log server **7** ascertains whether the log list is empty.

When log list is empty in STEP **S31,** since it is not possible to execute log analysis of the log application, processing becomes one in which log analysis ends, and then processing proceeds to STEP **S36,** followed by conducting processing in which termination processing of log analysis is executed. When existing log list, processing proceeds to STEP **S32,** and then processing pulls out log from the log list and pulls out login interface ID from <DATA> tag. Next, in processing of STEP **S33,** processing generates log analysis interface **70** from login interface ID. This is one in which processing asks login interface management unit **69** illustrated in FIG.17 to generate the log analysis interface **70** with the result that it is possible to generate the log analysis interface **70.** Next, in processing of STEP **S34,** log contained on the inside of <DATA> tag is analyzed using the log analysis interface **70** generated in STEP **S33.** As a result, data of necessary items is extracted, and then, in processing of STEP **S35,** result illustrated in FIG.24 is stored. Subsequently, processing from STEP **S31** to STEP **S35** is repeated until log list becomes empty.

### Providing Method of Log Analyzed result

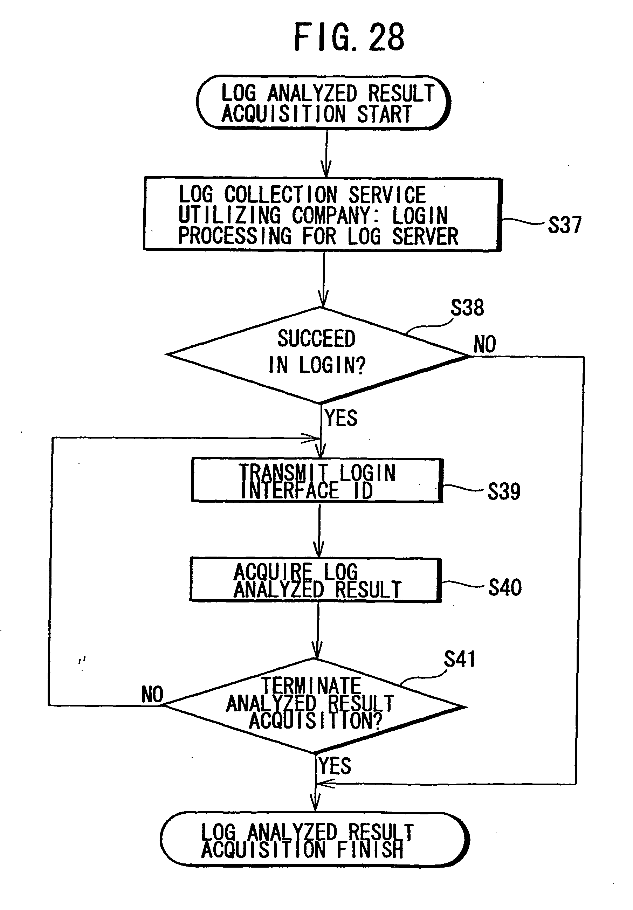

Next, as for providing method of the case that log analyzed result analyzed by the log server **7** is provided for log collection service utilizing company that utilizes the log analyzed result will be explained using flowchart illustrated in FIG.28. FIG.28 illustrates flow of the case that log collection service utilizing companies **9** to **12** to be log utilization terminal devices require log analyzed result acquisition to the log server **7.** Firstly, in processing of STEP **S37,** login processing of the log collection service utilizing companies **9** to **12** for the log server **7** is executed. Namely, the log collection service utilizing company transmits name of log collection utilization to the log server **7,** namely, transmits licensee name and authentication data to the log server **7** via the internet **8** illustrated in FIG.1. The log server **7** executes authentication processing of the log collection service utilizing companies by using these information. Then, processing of STEP **S38** judges authentication result, when authentication data is judged as effective data, processing proceeds to STEP **S39.** On the other hand, the authentication data is of no effect, judgment that login processing is failure is input to the log server **7** and then log analyzed result acquisition processing is terminated.

In STEP **S38,** when the log collection service utilizing company succeeds in login, the log collection service utilizing company becomes log analyzed result acquisition feasible state. In STEP **S39,** the log collection service utilizing company requires log analyzed result of being desired to obtain. Namely, the log collection service utilizing company specifies login interface ID and then transmitting the login interface ID. Thereupon, the analyzed result is retrieved in the log server **7** and then processing of STEP **S40** provides transmission of retrieval result for the log collection service utilizing company. Then, processing of STEP **S41** permits termination judgment of the log analyzed result acquisition processing. When the log analyzed result is necessary yet, processing returns to processing of STEP **S39,** then processing of STEP **S39** to STEP **S41** are repeated. Here, when being judged as acquisition termination, the log analyzed result acquisition processing is terminated.

In such a way described above, the log collection service utilizing company becomes capable of acquiring desired log collection result. However, login interface ID which is capable of being specified is limited to login interface **38** established by the log collection service utilizing company, when another login interface **38** is specified, no analyzed result is returned.

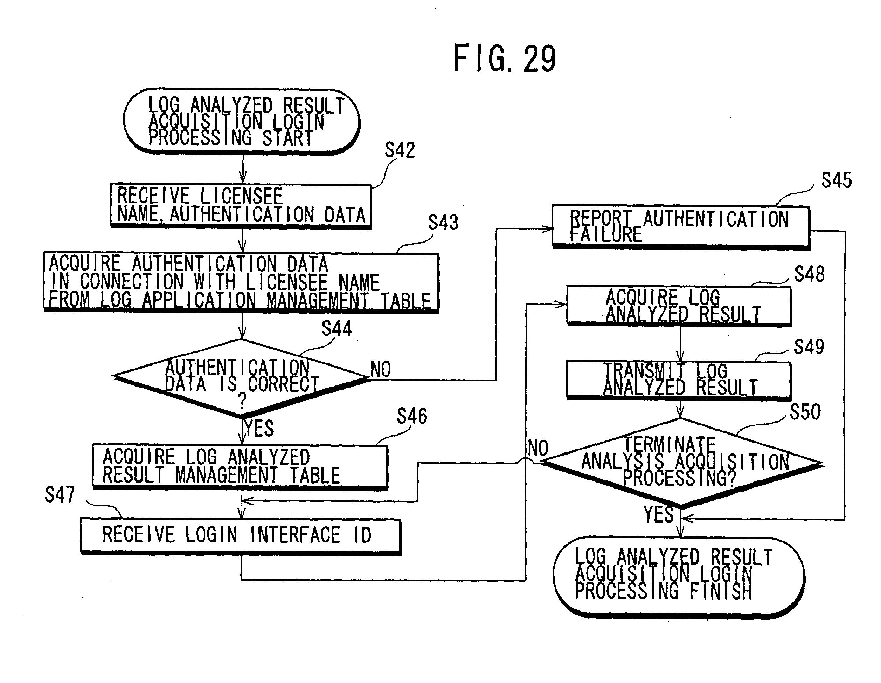

Next, as for processing at the side of the log server **7** of this log analyzed result acquisition processing will be explained referring to flowchart illustrated in FIG.29. Firstly, the log server **7** executes processing of login requirement from the log collection service utilizing companies **9** to **12.** Namely, the log server **7** acquires licensee name and authentication data. Next, in processing of STEP **S43,** the log server **7** pulls out authentication data corresponding to licensee name from the log application management table **78** illustrated in FIG.18. Then, in processing of STEP **S44,** the log server **7** judges whether login is effective or of no effective on the basis of authentication data stored therein and authentication data from the log collection service utilizing company.

When being judged as effective authentication data, provision processing of the log analyzed result is started. Namely, in processing of STEP **S46,** log server **7** acquires corresponding log analyzed result management table **83** to received licensee name from the log application management table **78** illustrated in FIG.19C. Then, in processing of STEP **S47,** the log server **7** receives login interface ID transmitted from the log collection service utilizing company. Next, in processing of STEP **S48,** the log server **7** reads out analyzed result from both received login interface ID and log analyzed result management table. Then, the log server **7** transmits read out result at processing of next STEP **S49** to the log collection service utilizing company.

In processing of STEP **S50,** the log server **7** judges whether read out processing of analyzed result is terminated by the log collection service utilizing company. The log server **7** judges that read out processing of analyzed result is not terminated in this STEP **S50,** processing returns to processing of STEP **S47,** and then read out processing of log analyzed result repeated again. When terminating the processing, the log server **7** executes log analyzed result acquisition termination processing. In addition, in processing of STEP **S44,** when the log server **7** judges that login is of no effect, the log server **7** informs the log collection service utilizing company that login results in failure at STEP **S45,** and then log analyzed result acquisition processing at the side of the log server **7** is terminated.

As described above, in the present embodiment, log collecting/analyzing system is constituted in which log collection terminal devices **1** to **4** collect logs to generate desired log information, and then the log information is transmitted to the log server **7,** and then the log server **7** analyzes received log information, then the log collection service utilizing companies **9** to **12** receive the analyzed result.

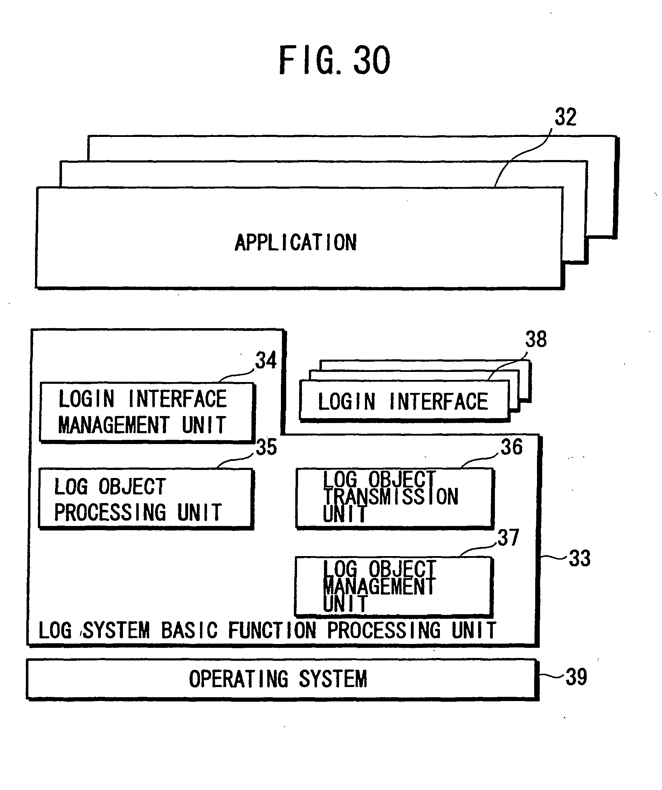

It should be noted that, above-described embodiment, as illustrated in FIG.8, it causes the login interface **38** to be designed and mounted within application **32** which utilizes basic function, however, preferably, it causes the login interface **38** to be separately designed from the application **32** and it causes the login interface **38** to be mounted with independent condition from the application **32.** Specifically, as illustrated in FIG.30, login interface management unit **34** of log system basic function processing unit **33** manages login interface **38** prepared independently from the above described application **32** and then the application **32** calls the login interface **38,** then the login interface **38** generates log information.

In addition, in the log collection service utilizing company, it is preferable that hardware for acquiring log analyzed result possesses the same function as that of log collection terminal devices **1** to **4** as illustrated in FIG.2 or it is preferable that hardware for acquiring log analyzed result possesses configuration of server type as illustrated in FIG.16. Then, as for display of acquired analyzed result, there is no particular limitation, thus it is possible to use freely. Log analyzed result is defined beforehand with specified form in accordance with log collection service utilizing company.

According to the present invention, function of log collecting/analyzing system is divided into two functions in which a function is one for collecting log information, and the other function is one for analyzing collected log information, further, the function for collecting log information belongs to client terminal device, while the function for analyzing the collected log information belongs to log server, whereby it becomes possible to specifically define log collection function, thus it is possible to collect more detailed log. For instance, in the case of game and so forth, what-like play mode is popular, or in the case of game of selecting character, what-like character is popular, that are useful information for design of the game. The useful information can be obtained by the present invention. For that reason, it is possible to make use of result of log analysis for development of the game while performing feedback of result of log analysis.

In addition, according to the present invention, which more minutely manages log user information and then connecting the log user information with log analyzed result, whereby it is possible to obtain compound analyzed result such that the game is popular by which layer of age and/or the game is popular by which sex. It is possible to record behavior of the user at the application on the basis of such analyzed result. Namely, it becomes possible to dynamically change function that permits development of the game to be changed according to analyzed result. In addition, when the user is puzzled how to use application from behavior of the user, it becomes possible to supply more effective hint to the game user from collected logs.

In addition, according to the present invention, since it is possible to independently define login interface for the sake of log collection, mounting of login interface capable of reuse becomes possible according to form of log. For instance, it is one in which user's taste is collected, and so forth. By this effect, login interface in relation to certain application is capable of being replaced with the same login interface, accordingly, the same login interface is capable of being utilized at the application, thus it becomes possible to improve development efficiency for the sake of log collection.

## Claims

1. A log collecting/analyzing system comprising:
a client terminal device (1 to 4) having collecting means for collecting log information, the log information including information about a log user, the log user being a user of the client terminal device (1 to 4), and transmitting means for transmitting the collected log information to a log server via a network (5):
a log server (7) having storing/analyzing means (6) for storing and analyzing the log information transmitted from the client terminal device (1 to 4): and
a log utilization terminal device having requiring means for requiring result of determined log information analyzed by the log server via a network and receiving means for receiving the analyzed result of log information transmitted from the log server, the analyzed result including information about the log user, wherein
the log utilization terminal device (9 to 12) is configured to define analyzing procedures executed by the storing/analyzing means in the log server,
**characterised in that**:
the storing/analyzing means (6) are configured to analyze the stored log information for each application program (32) utilizing databases comprising a log management database, a log storage database and a log analyzed result management database, and
the log management database is operable to store information about which log application program (32) is utilized by the log user,
the log storage database (79) is operable to store log information registered in a log application program (32), and
the log analyzed result management database (82) is operable to store the analyzed log information.

2. A log collecting/analyzing system according to claim 1, wherein the client terminal device (1 to 4) further comprises forming means configured to form a tree structure consisting of nodes and elements as a basic structure of each of the logs, and further comprises generating means for hierarchically generating a desired log information from the logs utilizing the tree structure.

3. A log collecting/analyzing system according to one of the preceding claims, wherein the client terminal device (1 to 4) manages the collected log information independently for every one of individual application programs (32).

4. A log collecting/analyzing system according to one of the preceding claims, wherein the client terminal device (1 to 4) stores the collected log information under an off-line condition.

5. A log collecting/analyzing system according to one of the preceding claims, wherein the client terminal device (1 to 4) stores the collected log information in a determined form.

6. A log collecting/analyzing system according to one of the preceding claims, wherein the storing/analyzing means (6) is operable to pull out necessary information from the log information transmitted from the client terminal device (1 to 4) for analysis.

7. A log collecting/analyzing system according to one of the preceding claims, wherein the log server (7) is operable to manage the log information transmitted from the client terminal device (1 to 4) independently for every one of individual application programs (32).

8. A log collecting/analyzing system according to one of the preceding claims, wherein the log server (7) is operable to store the log information transmitted from the client terminal device (1 to 4) in a determined form.

9. A log collecting/analyzing system according to one of the preceding claims, wherein the log server (7) and the client terminal device (1 to 4) are operable to manage at least one of duration of service for log collection or the number of collection times for log collection.

10. A method of log analysis comprising the steps of:
receiving log information transmitted from a log collection terminal device (1 to 4) to a log server via a network (5), the log information including information about a log user, the log user being a user of the log collection terminal device (1 to 4);
storing the received log information at the log server;
analyzing the stored log information stored at the log server by using a log analyzing interface (70) to perform analyzing procedures defined by a log utilizing terminal device,
**characterised in that** wherein the stored log information is analyzed for each application program (32) utilizing databases comprising a log management database, a log storage database and a log analyzed result management database, wherein
the log management database is operable to store information about which log application program (32) is utilized by a log user, the log user being a user of the log collection terminal device (1 to 4),
the log storage database (79) is operable to store log information registered in a log application program (32), and
the log analyzed result management database (82) is operable to store the analyzed log information; and
storing the result of the analyzing at the log server, the result of the analyzing including information about the log user.

11. A log analysis program to be executed on a computer, the program comprising:
receiving log information transmitted from a log collection terminal device (1 to 4) to a log server via a network (5), the log information including information about a log user, the log user being a user of the log collection terminal device (1 to 4);
storing the received log information at the log server:
analyzing the stored log information stored at the log server by using a log analyzing interface (70) to perform analyzing procedures defined by a log utilizing terminal device
**characterised in that** wherein the stored log information is analyzed for each application program (32) utilizing databases comprising a log management database, a log storage database and a log analyzed result management database, wherein
the log management database is operable to store information about which log application program (32) is utilized by a log user, the log user being a user of the log collection terminal device (1 to 4),
the log storage database (79) is operable to store log information registered in a log application program (32), and
the log analyzed result management database (82) is operable to manage the analyzed log information; and
storing the result of the analyzing at the log server, the result of the analyzing including information about the log user.

## Patentansprüche

1. Protokollsammel-/Protokollanalysesystem, mit:
einer Client-Endgerätvorrichtung (1 bis 4), die Sammelmittel zum Sammeln von Protokollinformationen, wobei die Protokollinformationen Informationen über einen Protokollanwender enthalten, wobei der Protokollanwender ein Anwender der Client-Endgerätvorrichtung (1 bis 4) ist, und Sendemittel zum Senden der gesammelten Protokollinformationen zu einem Protokoll-Server über ein Netz (5) besitzt;
einem Protokoll-Server (7), der Speicher-/Analysemittel (6) zum Speichern und Analysieren der von der Client-Endgerätvorrichtung (1 bis 4) gesendeten Protokollinformationen besitzt; und
einer Protokollnutzungs-Endgerätvorrichtung, die Anforderungsmittel zum Anfordern eines Ergebnisses bestimmter Protokollinformationen, die von dem Protokoll-Server analysiert worden sind, über ein Netz und Empfangsmittel zum Empfangen des analysierten Ergebnisses von Protokollinformationen, die von dem Protokoll-Server gesendet werden, besitzt, wobei das analysierte Ergebnis Informationen über den Protokollanwender enthält, wobei
die Protokollnutzungs-Endgerätvorrichtung (9 bis 12) konfiguriert ist, um Analyseprozeduren zu definieren, die von den Speicher-/Analysemitteln in dem Protokoll-Server ausgeführt werden,
**dadurch gekennzeichnet, dass**:
die Speicher-/Analysemittel (6) konfiguriert sind, um die gespeicherten Protokollinformationen für jedes Anwendungsprogramm (32) unter Verwendung von Datenbanken, die eine Protokollmanagement-Datenbank, eine Protokollspeicherungs-Datenbank und eine Protokollanalyseergebnismanagement-Datenbank enthalten, zu analysieren, und
die Protokollmanagement-Datenbank betreibbar ist, um Informationen darüber zu speichern, welches Protokollanwendungsprogramm (32) von dem Protokollanwender genutzt wird,
die Protokollspeicherungs-Datenbank (79) betreibbar ist, um Protokollinformationen zu speichern, die in einem Protokollanwendungsprogramm (32) eingetragen sind, und
die Protokollanalyseergebnismanagement-Datenbank (82) betreibbar ist, um die analysierten Protokollinformationen zu speichern.

2. Protokollsammel-/Protokollanalysesystem nach Anspruch 1, wobei die Client-Endgerätvorrichtung (1 bis 4) ferner Bildungsmittel enthält, die konfiguriert sind, um eine Baumstruktur zu bilden, die aus Knoten und Elementen als eine Basisstruktur jedes der Protokolle besteht, und ferner Erzeugungsmittel enthält, um gewünschte Protokollinformationen aus den Protokollen unter Verwendung der Baumstruktur hierarchisch zu erzeugen.

3. Protokollsammel-/Protokollanalysesystem nach einem der vorhergehenden Ansprüche, wobei die Client-Endgerätvorrichtung (1 bis 4) die gesammelten Protokollinformationen unabhängig für jedes von mehreren einzelnen Anwendungsprogrammen (32) managt.

4. Protokollsammel-/Protokollanalysesystem nach einem der vorhergehenden Ansprüche, wobei die Client-Endgerätvorrichtung (1 bis 4) die gesammelten Protokollinformationen unter einer Offline-Bedingung speichert.

5. Protokollsammel-/Protokollanalysesystem nach einem der vorhergehenden Ansprüche, wobei die Client-Endgerätvorrichtung (1 bis 4) die gesammelten Protokollinformationen in einer bestimmten Form speichert.

6. Protokollsammel-/Protokollanalysesystem nach einem der vorhergehenden Ansprüche, wobei die Speicher-/Analysemittel (6) betreibbar sind, um notwendige Informationen aus den Protokollinformationen, die von der Client-Endgerätvorrichtung (1 bis 4) gesendet werden, für die Analyse zu entnehmen.

7. Protokollsammel-/Protokollanalysesystem nach einem der vorhergehenden Ansprüche, wobei der Protokoll-Server (7) betreibbar ist, um die von der Client-Endgerätvorrichtung (1 bis 4) gesendeten Protokollinformationen unabhängig für jedes von mehreren einzelnen Anwendungsprogrammen (32) zu managen.

8. Protokollsammel-/Protokollanalysesystem nach einem der vorhergehenden Ansprüche, wobei der Protokoll-Server (7) betreibbar ist, um die von der Client-Endgerätvorrichtung (1 bis 4) gesendeten Protokollinformationen in einer bestimmten Form zu speichern.

9. Protokollsammel-/Protokollanalysesystem nach einem der vorhergehenden Ansprüche, wobei der Protokoll-Server (7) und die Client-Endgerätvorrichtung (1 bis 4) betreibbar sind, um eine Dienstdauer für die Protokollsammlung und/oder die Anzahl von Sammlungen für die Protokollsammlung zu managen.

10. Verfahren zur Protokollanalyse, das die folgenden Schritte enthält:
Empfangen von Protokollinformationen, die von einer Protokollsammel-Endgerätvorrichtung (1 bis 4) zu einem Protokoll-Server über ein Netz (5) gesendet werden, wobei die Protokollinformationen Informationen über einen Protokollanwender enthalten, wobei der Protokollanwender ein Anwender der Protokollsammel-Endgerätvorrichtung (1 bis 4) ist;
Speichern der empfangenen Protokollinformationen in dem Protokoll-Server;
Analysieren der gespeicherten Protokollinformationen, die in dem Protokoll-Server gespeichert sind, unter Verwendung einer ProtokollanalyseSchnittstelle (70), um Analyseprozeduren auszuführen, die durch eine Protokollnutzungs-Endgerätvorrichtung definiert sind,
**dadurch gekennzeichnet, dass**:
die gespeicherten Protokollinformationen für jedes Anwendungsprogramm (32) unter Verwendung von Datenbanken, die eine Protokollmanagement-Datenbank, eine Protokollspeicherungs-Datenbank und eine Protokollanalyseergebnismanagement-Datenbank enthalten, analysiert werden, wobei
die Protokollmanagement-Datenbank betreibbar ist, um Informationen darüber zu speichern, welches Protokollanwendungsprogramm (32) von einem Protokollanwender genutzt wird, wobei der Protokollanwender ein Anwender der Protokollsammel-Endgerätvorrichtung (1 bis 4) ist,
die Protokollspeicherungs-Datenbank (79) betreibbar ist, um Protokollinformationen, die in einem Protokollanwendungsprogramm (32) eingetragen sind, zu speichern, und
die Protokollanalyseergebnismanagement-Datenbank (82) betreibbar ist, um die analysierten Protokollinformationen zu speichern; und
Speichern des Ergebnisses der Analyse in dem Protokoll-Server, wobei das Ergebnis der Analyse Informationen über den Protokollanwender enthält.

11. Protokollanalyseprogramm, das auf einem Computer auszuführen ist, wobei das Programm enthält:
Empfangen von Protokollinformationen, die von einer Protokollsammel-Endgerätvorrichtung (1 bis 4) zu einem Protokoll-Server über ein Netz (5) gesendet werden, wobei die Protokollinformationen Informationen über einen Protokollanwender enthalten, wobei der Protokollanwender ein Anwender der Protokollsammel-Endgerätvorrichtung (1 bis 4) ist;
Speichern der empfangenen Protokollinformationen in dem Protokoll-Server;
Analysieren der in dem Protokoll-Server gespeicherten Protokollinformationen unter Verwendung einer Protokollanalyseschnittstelle (70), um Analyseprozeduren auszuführen, die durch eine Protokollnutzungs-Endgerätvorrichtung definiert sind,
**dadurch gekennzeichnet, dass**:
die gespeicherten Protokollinformationen für jedes Anwendungsprogramm (32) unter Verwendung von Datenbanken, die eine Protokollmanagement-Datenbank, eine Protokollspeicherungs-Datenbank und eine Protokollanalyseergebnismanagement-Datenbank enthalten, analysiert werden, wobei
die Protokollmanagement-Datenbank betreibbar ist, um Informationen darüber zu speichern, welches Protokollanwendungsprogramm (32) von einem Protokollanwender genutzt wird, wobei der Protokollanwender ein Anwender der Protokollsammel-Endgerätvorrichtung (1 bis 4) ist,
die Protokollspeicherungs-Datenbank (79) betreibbar ist, um Protokollinformationen, die in einem Protokollanwendungsprogramm (32) eingetragen sind, zu speichern, und
die Protokollanalyseergebnismanagement-Datenbank (82) betreibbar ist, um die analysierten Protokollinformationen zu managen; und
Speichern des Ergebnisses der Analyse in dem Protokoll-Server, wobei das Analyseergebnis Informationen über den Protokollanwender enthält.

## Revendications

1. Système de collecte/analyse de journal comprenant :
un dispositif terminal de client (1 à 4) comportant des moyens de collecte pour collecter des informations de journal, les informations de journal comprenant des informations concernant un utilisateur de journal, l'utilisateur de journal étant un utilisateur du dispositif terminal de client (1 à 4), et des moyens de transmission pour transmettre les informations de journal collectées à un serveur de journal par l'intermédiaire d'un réseau (5) ;
un serveur de journal (7) comportant des moyens de mémorisation/analyse (6) pour mémoriser et analyser les informations de journal transmises par le dispositif terminal de client (1 à 4) ; et
un dispositif terminal d'utilisation de journal comportant des moyens de demande pour demander le résultat d'informations de journal déterminées analysées par le serveur de journal par l'intermédiaire d'un réseau et des moyens de réception pour recevoir le résultat analysé d'informations de journal transmis par le serveur de journal, le résultat analysé comprenant des informations concernant l'utilisateur de journal, dans lequel
le dispositif terminal d'utilisation de journal (9 à 12) est configuré pour définir des procédures d'analyse exécutées par les moyens de mémorisation/analyse dans le serveur de journal,
**caractérisé en ce que** :
les moyens de mémorisation/analyse (6) sont configurés pour analyser les informations de journal mémorisées pour chaque programme d'application (32) en utilisant des bases de données comprenant une base de données de gestion de journal, une base de données de mémorisation de journal et une base de données de gestion de résultat analysé de journal, et
la base de données de gestion de journal peut être utilisée pour mémoriser des informations concernant le programme d'application de journal (32) utilisé par l'utilisateur de journal,
la base de données de mémorisation de journal (79) peut être utilisée pour mémoriser des informations de journal enregistrées dans un programme d'application de journal (32), et
la base de données de gestion de résultat analysé de journal (82) peut être utilisée pour mémoriser les informations de journal analysées.

2. Système de collecte/analyse de journal selon la revendication 1, dans lequel le dispositif terminal de client (1 à 4) comprend en outre des moyens de formation configurés pour former une structure arborescente consistant en des noeuds et des éléments en tant que structure de base de chacun des journaux, et comprend en outre des moyens de génération pour générer hiérarchiquement des informations de journal souhaitées à partir des journaux en utilisant la structure arborescente.

3. Système de collecte/analyse de journal selon l'une des revendications précédentes, dans lequel le dispositif terminal de client (1 à 4) gère les informations de journal collectées indépendamment pour chacun des programmes d'application (32) individuels.

4. Système de collecte/analyse de journal selon l'une des revendications précédentes, dans lequel le dispositif terminal de client (1 à 4) mémorise les informations de journal collectées dans une condition hors ligne.

5. Système de collecte/analyse de journal selon l'une des revendications précédentes, dans lequel le dispositif terminal de client (1 à 4) mémorise les informations de journal collectées sous une forme déterminée.

6. Système de collecte/analyse de journal selon l'une des revendications précédentes, dans lequel les moyens de mémorisation/analyse (6) peuvent être utilisés pour extraire des informations nécessaires des informations de journal transmises par le dispositif terminal de client (1 à 4) pour analyse.

7. Système de collecte/analyse de journal selon l'une des revendications précédentes, dans lequel le serveur de journal (7) peut être utilisé pour gérer les informations de journal transmises par le dispositif terminal de client (1 à 4) indépendamment pour chacun des programmes d'application (32) individuels.

8. Système de collecte/analyse de journal selon l'une des revendications précédentes, dans lequel le serveur de journal (7) peut être utilisé pour mémoriser les informations de journal transmises par le dispositif terminal de client (1 à 4) sous une forme déterminée.

9. Système de collecte/analyse de journal selon l'une des revendications précédentes, dans lequel le serveur de journal (7) et le dispositif terminal de client (1 à 4) peuvent être utilisés pour gérer au moins l'un d'une durée de service pour la collecte de journal ou du nombre de collectes pour la collecte de journal.

10. Procédé d'analyse de journal comprenant les étapes consistant à :
recevoir des informations de journal transmises par un dispositif terminal de collecte de journal (1 à 4) à un serveur de journal par l'intermédiaire d'un réseau (5), les informations de journal comprenant des informations concernant un utilisateur de journal, l'utilisateur de journal étant un utilisateur du dispositif terminal de collecte de journal (1 à 4) ;
mémoriser les informations de journal reçues dans le serveur de journal ;
analyser les informations de journal mémorisées qui ont été mémorisées dans le serveur de journal en utilisant une interface d'analyse de journal (70) pour effectuer des procédures d'analyse définies par un journal en utilisant le dispositif terminal,
**caractérisé en ce que** :
les informations de journal mémorisées sont analysées pour chaque programme d'application (32) en utilisant des bases de données comprenant une base de données de gestion de journal, une base de données de mémorisation de journal et une base de données de gestion de résultat analysé de journal, dans lequel
la base de données de gestion de journal peut être utilisée pour mémoriser des informations concernant le programme d'application de journal (32) utilisé par un utilisateur de journal, l'utilisateur de journal étant un utilisateur du dispositif terminal de collecte de journal (1 à 4),
la base de données de mémorisation de journal (79) peut être utilisée pour mémoriser des informations de journal enregistrées dans un programme d'application de journal (32), et
la base de données de gestion de résultat analysé de journal (82) peut être utilisée pour mémoriser les informations de journal analysées ; et
mémoriser le résultat de l'analyse dans le serveur de journal, le résultat de l'analyse comprenant des informations concernant l'utilisateur de journal.

11. Programme d'analyse de journal à exécuter sur un ordinateur, le programme consistant à :
recevoir des informations de journal transmises par un dispositif terminal de collecte de journal (1 à 4) à un serveur de journal par l'intermédiaire d'un réseau (5), les informations de journal comprenant des informations concernant un utilisateur de journal, l'utilisateur de journal étant un utilisateur du dispositif terminal de collecte de journal (1 à 4) ;
mémoriser les informations de journal reçues dans le serveur de journal ;
analyser les informations de journal mémorisées qui ont été mémorisées dans le serveur de journal en utilisant une interface d'analyse de journal (70) pour effectuer des procédures d'analyse définies par un dispositif terminal d'utilisation de journal,
**caractérisé en ce que** :
les informations de journal mémorisées sont analysées pour chaque programme d'application (32) en utilisant des bases de données comprenant une base de données de gestion de journal, une base de données de mémorisation de journal et une base de données de gestion de résultat analysé de journal, dans lequel
la base de données de gestion de journal peut être utilisée pour mémoriser des informations concernant le programme d'application de journal (32) utilisé par un utilisateur de journal, l'utilisateur de journal étant un utilisateur du dispositif terminal de collecte de journal (1 à 4),
la base de données de mémorisation de journal (79) peut être utilisée pour mémoriser des informations de journal enregistrées dans un programme d'application de journal (32), et
la base de données de gestion de résultat analysé de journal (82) peut être utilisée pour gérer les informations de journal analysées ; et
mémoriser le résultat de l'analyse dans le serveur de journal, le résultat de l'analyse comprenant des informations concernant l'utilisateur de journal.
